# EUROPÄISCHE PATENTSCHRIFT

(11) **EP 0 617 209 B1**
(45) Veröffentlichungstag und Bekanntmachung des Hinweises auf die Patenterteilung: **14.05.1997**
(21) Anmeldenummer: 94104803.5
(22) Anmeldetag: 25.03.1994
(51) Int. Cl.: F16D 1/08, F16D 13/50

(54) **Anordnung zur Befestigung einer Kupplung an einer Kurbelwelle**
Mounting assembly for clutch on crank shaft
Ensemble de montage pour un embrayage à un vilebrequin

(30) Priorität: 26.03.1993 DE 4309871
(43) Veröffentlichungstag der Anmeldung: 28.09.1994
(73) Patentinhaber: FICHTEL & SACHS AG, D-97424 Schweinfurt (DE)
(72) Erfinder: Kurz, Walter, Prof. Dr., D-87471 Durach (DE); Baier, Wolfgang, D-97502 Obbach (DE); Meinig, Uwe, D-69469 Weinheim-Steinklingen (DE)
(74) Vertreter: Liska, Horst, Dr.-Ing.

(56) Entgegenhaltungen:
- EP-A- 0 078 163
- DE-C- 872 886
- DE-C- 1 162 640
- DE-U- 8 911 061
- FR-A- 2 492 022
- FR-A- 2 589 959
- FR-A- 2 689 192
- GB-A- 885 699
- AUTOMOTIVE ENGINEERING, Bd.101, Nr.1, Januar 1993, WARRENDALE US Seiten 13 - 15 'transmission clutch and flywheel concept'

## Beschreibung

Die Erfindung betrifft eine Baugruppe, umfassend eine um eine Drehachse drehbare Kurbelwelle einer Brennkraftmaschine eines Kraftfahrzeugs und eine an einem Abtriebsende der Kurbelwelle mittels einer Preßsitzkupplung befestigte Eingangskomponente einer als Reibungskupplung oder hydrodynamische Kupplung oder Drehmomentwandler ausgebildeten Kupplung.

Herkömmliche Reibungskupplungen von Kraftfahrzeugen umfassen in der Regel ein ein- oder zweiteiliges Schwungrad, an welchem eine Druckplatteneinheit lösbar angeschraubt ist. Die Druckplatteneinheit umfaßt eine axial bewegliche Anpreßplatte, die an einem an dem Schwungrad angeschraubten Kupplungsgehäuse drehfest, aber axial beweglich geführt ist und von einer Kupplungshauptfeder, üblicherweise einer Membranfeder, zum Schwungrad hin vorgespannt wird. Die Anpreßplatte und das Schwungrad bilden Reibflächen für eine dazwischen angeordnete Kupplungsscheibe, deren Nabe drehfest, aber axial beweglich auf einer Eingangswelle eines im Antriebstrang des Kraftfahrzeugs nachfolgenden Getriebes sitzt. Das Schwungrad ist andererseits an einem Endflansch der Kurbelwelle der Brennkraftmaschine mit einer Vielzahl um die Drehachse der Kurbelwelle herum angeordneter Schrauben angeschraubt.

Bei herkömmlichen Reibungskupplungen verdeckt die Kupplungsscheibe und die Membranfeder in axialer Richtung gesehen die das Schwungrad am Endflansch der Kurbelwelle haltenden Schrauben. Bei der Montage der Reibungskupplung muß deshalb zunächst das Schwungrad an dem Endflansch angeschraubt werden, bevor nachfolgend die Kupplungsscheibe angesetzt und die Druckplatteneinheit an dem Schwungrad angeschraubt werden kann. Dieses Montageverfahren ist nicht nur zeitraubend, sondern hat auch den Nachteil, daß die Reibungskupplung vor der Montage nicht insgesamt, also einschließlich der Kupplungsscheibe und des Schwungrads, auf Einhaltung der Bauvorschriften überprüft werden kann.

Aus der DE-A-41 17 571 ist es bekannt, sowohl die Kupplungsscheibe als auch die Membranfeder mit Löchern zu versehen, die mit den für die Befestigung des Schwungrads am Endflansch der Kurbelwelle vorgesehenen Schrauben axial fluchten. Auf diese Weise kann die Druckplatteneinheit zusammen mit der Kupplungsscheibe und dem Schwungrad bereits vor der Montage an der Kurbelwelle zu einer Baueinheit (Modulkupplung) zusammengebaut werden. Die Befestigungsschrauben können durch die Löcher der Kupplungsscheibe und der Membranfeder hindurch in den Endflansch der Kurbelwelle eingedreht werden.

Aus DE-A-33 15 232 ist es bekannt, eine aus Schwungrad, Druckplatteneinheit und Kupplungsscheibe bestehende Modulkupplung, bei welcher das Kupplungsgehäuse um das Schwungrad herum gebördelt, also nicht lösbar mit diesem verbunden ist, mittels einer Zentralschraube am Abtriebsende der Kurbelwelle anzuschrauben. Das Abtriebsende der Kurbelwelle enthält eine zentrische, mit einem Innengewinde versehene Stirnöffnung, in die die Zentralschraube eingeschraubt ist. Die Zentralschraube hat einen radial abstehenden Flansch, der das Schwungrad gegen die axiale Stirnfläche des Abtriebsendes der Kurbelwelle spannt. Die Zentralschraube ist als Hohlschraube ausgebildet und enthält zugleich ein Pilotlager, welches das motorseitige Ende der durch die Nabe der Kupplungsscheibe tretenden Getriebeeingangswelle radial führt. Das über den Radialflansch der Zentralschraube übertragbare Drehmoment ist jedoch vergleichsweise niedrig, da nur begrenzte Anzugsmomente der Zentralschraube erreicht werden können.

Aus DE-A-40 13 298 ist es für die Befestigung des Schwungrads einer Modulkupplung bekannt, die einander axial zugewandten Flächen eines Endflansches der Kurbelwelle und des Schwungrads mit einer Radialverzahnung (Hirth-Verzahnung) zu versehen, und das Schwungrad wiederum mit einer zugleich das Pilotlager der Getriebeeingangswelle enthaltenden Zentralschraube am Abtriebsende der Kurbelwelle axial zu fixieren. Die Zentralschraube übernimmt in diesem Fall lediglich die axiale Fixierung, während das Drehmoment mittels der Radialverzahnung von der Kurbelwelle auf das Schwungrad übertragen wird. Die in eine zentrische Gewindeöffnung des Abtriebendes der Kurbelwelle eingeschraubte Zentralschraube ist im Bereich des Pilotlagers mit zentrischen Schlüsselflächen versehen, in die durch die Nabe der Kupplungsscheibe hindurch ein Schraubwerkzeug eingesteckt werden kann, um die Zentralschraube an der Kurbelwelle festzuziehen.

Schließlich ist es aus dem Buch K. Wiecking und R. Gebauer "Die Motoren der Personenkraftwagen" Verlag Chr. Belser, Stuttgart, 1952, Seite 314, Abbildung 341, bekannt, das Schwungrad einer herkömmlichen Reibungskupplung mittels einer Konus-Preßsitzkupplung am Abtriebsende der Kurbelwelle der Brennkraftmaschine zu befestigen. Das Abtriebende trägt einen zur Kupplungsscheibe hin sich verjüngenden Außenkonus, auf welchen das Schwungrad mit einem Innenkonus seiner Nabe aufgesetzt ist. Das Abtriebsende der Kurbelwelle endet in einem Schraubzapfen, auf den eine das Schwungrad sichernde Mutter aufgeschraubt ist. Die bekannte Konstruktion erlaubt es jedoch nicht, die Druckplatteneinheit zusammen mit der Kupplungsscheibe und dem Schwungrad als Baueinheit zu montieren.

Aus dem britischen Patent 885 699 ist es ferner bekannt, auf einen zylindrischen Endabschnitt einer Welle eine hohlzylindrische Nabe aufzusetzen und die Nabe im Preßsitz auf der Welle zu fixieren. Der Endabschnitt der Welle enthält eine zu deren Achse zentrische Stirnöffnung, in die eine Innenkonusbuchse eingesetzt ist. Die Innenkonusbuchse umschließt ihrerseits eine Außenkonusbuchse, welche mittels einer Schraube in die Innenkonusbuchse eingezogen werden kann. Durch axiales Einziehen der Außenkonusbuchse in die Innenkonusbuchse wird der Endabschnitt der Welle radial aufgeweitet und sorgt für eine Preßsitzverbindung zur Nabe.

Ähnliche Preßsitzverbindungen zwischen einer Welle und einem Bauteil sind aus FR-A-2 589 959 und 2 492 022 bekannt, wobei es aus dem letztgenannten Dokument bekannt ist, einen zur radialen Aufweitung eines Endabschnitts einer Welle vorgesehenen Spreizkörper als Kolben auszubilden, der zusammen mit der Stirnöffnung der Welle einen Hydraulikzylinder bildet.

Aus dem deutschen Patent 872 886 ist es bekannt, den Endabschnitt einer im Preßsitz mit einem Bauteil zu verbindenden Welle durch eine Vielzahl tellerfederartiger, axial hintereinander angeordneter Ringe oder durch eine Stahlbandspirale aufzuweiten.

Aus dem deutschen Patent 11 62 640 ist es bekannt, in einen Ringspalt zwischen einer Welle und einer Nabe konusförmige Ringe mittels einer Doppel spindel zueinander gegensinnig in einen doppelkonusförmigen Ringspalt einzuziehen.

Aus dem deutschen Gebrauchsmuster 89 11 061 ist es bekannt, eine mit einer kegelförmigen Öffnung versehene Nabe auf ein kegelförmiges Ende einer Welle mittels einer Differenzgewindeschraube aufzuziehen, die mit ersten Gewindegängen mit der Nabe und mit zweiten Gewindegängen mit dem Kegelende der Welle verschraubt ist.

Schließlich ist aus EP-A-0 078 163 eine Wellenkupplung bekannt, die zur drehfesten Verbindung zweier Wellenenden die radiale Spreizwirkung eines axial verspannten Tellerfederpakets ausnutzt.

Das Schwungrad herkömmlicher Reibungskupplungen, aber auch das die Eingangskomponente einer hydrodynamischen Kupplung oder eines Drehmomentwandlers bildende Gehäuse wird, wie bereits erwähnt, an einem radial vom Abtriebsende der Kurbelwelle abstehenden Ringflansch mit einer Vielzahl Schrauben befestigt. Bei einer solchen Verbindung verlaufen die einander zugeordneten, das Drehmoment übertragenden Fügeflächen im wesentlichen in einer achsnormalen Ebene, die auch zwischen der Kurbelwelle und der Eingangskomponente wirkende Kippmomente überträgt. Die Vielzahl der zur Befestigung erforderlichen achsparallelen Schrauben bedingt einen vergleichsweise großen Zeitaufwand bei der Montage. Darüber hinaus kann der Durchmesser des Befestigungsflansches am Abtriebsende der Kurbelwelle nicht beliebig verkleinert werden, da er die Gewindelöcher für die Befestigungsschrauben aufnimmt. Andererseits muß jedoch das aus dem Motorgehäuse der Brennkraftmaschine austretende Abtriebsende der Kurbelwelle durch einen Dichtring gegenüber dem Motorgehäuse öldicht abgedichtet werden. Um einen solchen, nicht teilbaren Dichtring einbauen zu können, muß der Dichtring auf dem Außenumfang des vom Abtriebsende der Kurbelwelle radial abstehenden Befestigungsflansches sitzen und damit einen größeren Durchmesser haben, als dies ohne Befestigungsflansch angesichts der daran anschließenden Wellenbereiche der Kurbelwelle erforderlich ware. Der durch die bisherige Befestigungsart bedingte große Dichtringdurchmesser führt damit zwangsläufig zu erhöhter Dichtringreibung und damit zu erhöhtem Kraftstoffverbrauch der Brennkraftmaschine sowie zu erhöhtem Verschleiß.

Es ist Ziel der Erfindung, eine Baugruppe anzugeben, bei der eine Eingangskomponente einer Kupplung an der Kurbelwelle einer Brennkraftmaschine befestigt ist und zwar so, daß man mit einem vergleichsweise geringen Wellendurchmesser der Kurbelwelle im Bereich des Abtriebendes auskommt und bei leicht durchzuführender Montage die Übertragung hoher Drehmomente über die Befestigungsanordnung ermöglicht.

Die Erfindung geht von einer Baugruppe der z. B. aus DE-A-33 15 232 bekannten Art aus, die eine um eine Drehachse drehbare Kurbelwelle einer Brennkraftmaschine eines Kraftfahrzeugs und eine an einem Abtriebsende der Kurbelwelle mittels einer Preßsitzkupplung befestigte Eingangskomponente einer als Reibungskupplung oder hydrodynamische Kupplung oder Drehmomentwandler ausgebildeten Kupplung umfaßt, wobei die Eingangskomponente und das Abtriebsende einander zugeordnete, im wesentlichen axial verlaufende Fügeflächen am Innenumfang einer zentrischen Öffnung der Eingangskomponente einerseits und am Außenumfang eines in diese Öffnung axial hineinreichenden Bereichs des Abtriebsendes andererseits sowie einander zugeordnete, die Eingangskomponente relativ zur Kurbelwelle axial positionierende, radial verlaufende Ringanschlagflächen aufweisen.

Das vorstehend erläuterte Ziel wird erfindungsgemäß dadurch erreicht, daß die im wesentlichen axial verlaufenden Fügeflächen die drehmomentübertragenden Flächen der Preßsitzkupplung bilden, wobei das Abtriebsende der Kurbelwelle eine zentrische Stirnöffnung aufweist, in der ein die äußere Fügefläche des Abtriebsendes radial nach außen gegen die innere Fügefläche der Eingangskomponente spannendes Spreizelement sitzt, das den Außendurchmesser des Abtriebsendes (5) relativ zum Innendurchmesser eines radial gegenüberliegenden Bereichs der Stirnöffnung durch Einleiten einer axialen Kraft in das Spreizelement aufspreizen kann.

Bei einer solchen Anordnung bestimmt der Fügeflächendurchmesser den Durchmesser des Abtriebendes der Kurbelwelle und damit im wesentlichen den Innendurchmesser der das Abtriebsende relativ zum Motorgehäuse abdichtenden Dichtringanordnung. Da mit bereits vergleichsweisen kleinen Fügeflächendurchmessern hinreichend große Drehmomente übertragen werden können, kann der Dichtringdurchmesser auf Werte verkleinert werden, die im wesentlichen gleich oder wenig größer sind, als der Fügeflächendurchmesser oder aber die im wesentlichen gleich oder kleiner sind als der Durchmesser des benachbarten Kurbelwellenhauptlagers. Durch diese Maßnahme wird die Dichtringreibung beträchtlich vermindert.

Die einander zugeordneten Fügeflächen des Abtriebsendes und der Eingangskomponente können für eine Fügepassung oder ggf. eine leichte Übergangspassung bemessen sein, so daß die Eingangskomponente zunächst im wesentlichen ohne Hilfsmittel und gegebenenfalls mit einer leichten thermischen Aufweitung der Eingangskomponente auf das Abtriebsende aufgesteckt werden kann. Zum Schließen der Preßsitzkupplung muß lediglich das Spreizelement axial betätigt werden, was mit verhältnismäßig geringem Werkzeugaufwand und zeitlichem Aufwand durchgeführt werden kann, da das Spreizelement zentral wirkt.

In einer bevorzugten Ausgestaltung hat das Spreizelement, wie bereits eingangs erläutert, einen konischen Außenmantel und die Stirnöffnung oder eine in die Stirnöffnung eingesetzte Konushülse hat eine dem konischen Außenmantel zugeordneten konischen Innenmantel. Insbesondere die letztgenannte Variante bietet trotz ihres erhöhten Bauteileaufwands Vorteile, da in diesem Fall die Stirnöffnung des Abtriebsendes der Kurbelwelle zylindrisch sein kann. Der konische Außenmantel des Spreizelements kann sich zur Kurbelwelle hin verjüngen, muß also bei der Montage der Eingangskomponente in die Kurbelwelle hineingedrückt werden. Von Vorteil ist aber auch die alternative Variante, bei der sich das Spreizelement von der Kurbelwelle weg verjüngt, was aber eine Konushülse der vorstehend erwähnten Art bedingt, um das Spreizelement einbauen zu können. Vorteilhaft ist insbesondere, daß die Konushülse und das Spreizelement vor dem Aufsetzen der Eingangskomponente in die Stirnöffnung der Kurbelwelle eingesetzt und beispielsweise mittels eines Sicherungsrings dort fixiert werden kann. Für die axiale Fixierung der Konushülse während des Spannens der Preßsitzkupplung durch Herausziehen des Spreizelements kann aber auch vorgesehen sein, daß die Eingangskomponente mit der Konushülse radial überlappt, oder aber daß die Nabe der Kupplungsscheibe hierfür axial gegen die Konushülse verschoben wird, so daß sie als Anschlag ausgenutzt werden kann.

Für das Spannen der Preßsitzkupplung können an dem Spreizelement in einer von axial außen zugänglichen, zentrischen, axialen Öffnung radial sich erweiternde Hinterschneidungsflächen vorgesehen sein, an die Werkzeugmittel, beispielsweise eine Spannstange oder dgl. angesetzt werden können. Die Hinterschneidungsflächen werden am einfachsten durch eine zentrische, axiale Gewindebohrung realisiert. Bei einem von der Kurbelwelle axial weg sich verjüngenden Spreizelement, kann sich die in die Gewindebohrung des Spreizelementes eingeschraubte Werkzeugstange am Boden oder einer sonstigen mit der Gewindebohrung axial fluchtenden Stützfläche der Stirnöffnung abstützen und so das konusförmige Spreizelement in Schließrichtung treiben. Alternativ können jedoch auch externe Zugkräfte auf die Werkzeugstange ausgeübt werden, was jedoch bei kontinuierlicher Zugbelastung zusätzliche Werkzeugmittel erfordert, die beispielsweise in Form einer die Werkzeugstange umschließenden und an der Konushülse oder der Kurbelwelle direkt abgestützten Hülse realisiert werden können. Es versteht sich, daß die abzustützenden Reaktionskräfte auch über die Nabe der Kupplungsscheibe geführt werden können. Hier und auch bei den folgenden Ausgestaltungen kann gegebenenfalls auf die Ableitung von Reaktionskräften aus der Kurbelwelle verzichtet werden, wenn die auf den Spreizkörper ausgeübten, axialen Kräfte impulsartig aufgebracht werden, da dann das vergleichsweise große axiale Massenträgheitsmoment der Kurbelwelle die Stoßbelastung aufzunehmen vermag, ohne Schäden an den Kurbelwellenlagern fürchten zu müssen. Zumindest zum Aufnehmen der anfänglichen Stoßbelastung bei noch nicht an die Kurbelwelle angekuppeltem Schwungrad können jedoch auch hier die Reaktionskraft aufnehmenden Werkzeugmittel vorgesehen werden.

Die vorstehenden Ausführungsformen setzen in axialer Richtung selbsthemmende Konen voraus. Eine Ausführungsform, die auch bei Spreizelementen mit nicht selbsthemmendem Außenkonus eingesetzt werden kann, enthält in zentrischen Öffnungen sowohl des Spreizelements als auch der Kurbelwelle Gewindebohrungen mit gleichem Windungssinn, jedoch unterschiedlicher Gewindesteigung. Die Gewindebohrungen nehmen eine Differenzgewindeschraube auf, über die das Spreizelement in Spannrichtung relativ zur Kurbelwelle axialkraftverstärkt verstellbar ist. Es versteht sich, daß die Gewindebohrungen aber auch entgegengesetzten Windungssinn haben können.

In einer zweckmäßigen Ausgestaltung kann vorgesehen sein, daß einer der konischen Mäntel, insbesondere der konische Außenmantel des Spreizelements wenigstens eine Ringnut enthält, die über wenigstens einen radialen Kanal des Spreizelements mit einem von axial außen zugänglichen Druckmittelanschluß des Spreizelements verbunden ist. Axial beiderseits der Ringnut sind die beiden konischen Außenmäntel ggf. durch zusätzliche Dichtringe gegeneinander abgedichtet. Diese Konstruktion erlaubt es, den radialen Preßverband hydraulisch aufzuweiten, so daß das Spreizelement für die Demontage der Kupplung problemlos gelöst werden kann.

In einer bevorzugten Ausgestaltung enthält das Spreizelement aber das Abtriebsende der Kurbelwelle eine zentrische Öffnung, in die ein Pilotlager für die radiale Führung einer Getriebeeingangswelle oder eines Führungszapfens eines Drehmomentwandlers oder dgl. eingesetzt werden kann.

Soweit das Spreizelement mit einer zentrischen Gewindeöffnung für den Angriff der Werkzeugmittelkräfte versehen ist, ist der Innendurchmesser des Pilotlagers so gewählt, daß die Werkzeugmittel eingesetzt werden können, ohne daß das Pilotlager ausgebaut oder beschädigt werden kann. Soweit das Pilotlager auf der kupplungsfernen Seite der Gewindeöffnung des Spreizelements angeordnet ist, hat es deshalb zweckmäßigerweise einen kleineren Innendurchmesser als die Gewindeöffnung, im anderen Fall einen größeren Innendurchmesser.

Bei den vorstehend erläuterten Varianten ist das Spreizelement als Konus ausgebildet. Alternativ sind jedoch auch andere Spreizelemente verwendbar, die durch Einleiten von Axialkräften radial aufgeweitet werden können. Geeignet sind insbesondere Tellerfederpakete, deren flach aneinanderliegende Tellerfedern zentrische Öffnungen haben, durch die eine in eine zentrische Gewindebohrung der Kurbelwelle geschraubte Spannschraube tritt. Solche, ggf. mit radialen Fingern versehene Tellerfedern haben im entspannten Zustand geringfügig konische Form, die sich beim Spannen unter Durchmesservergrößerung ausflacht. Ggf. kann vorgesehen sein, daß die Tellerfedern verrundete Außenränder haben, während der Innenmantel der Öffnung der Eingangskomponente mit einer Vielzahl umlaufender Rillen zur Aufnahme der verrundeten Außenränder der Tellerfedern versehen ist. Durch diese Maßnahme wird die axiale Haltekraft der Tellerfedern erhöht. Die Tellerfedern können sich unter Umständen im gespannten Zustand so verklemmen, daß sie beim Lösen der Spannschraube nicht selbsttätig entspannen können. Um die Eingangskomponente der Kupplung dennoch demontieren zu können, kann für diesen Fall vorgesehen sein, daß die Spannschraube auf der zur Kurbelwelle gelegenen Seite des Tellerfederpakets eine mit den Tellerfedern radial überlappende Ringschulter aufweist.

Die Stirnöffnung läßt am Abtriebsende der Kurbelwelle einen rohrförmigen Ansatz entstehen, der aus Gründen der Biegesteifigkeit und Maßhaltigkeit des Abtriebendes bevorzugt ringförmig geschlossen ist. Es hat sich gezeigt, daß die über das Spreizelement aufbringbaren Radialkräfte ausreichen, um nicht nur den radialen Preßverband sicherzustellen, sondern auch den Rohransatz hinreichend aufweiten zu können. Insbesondere bei größerer Wandstärke des Rohransatzes oder bei erhöhten Preßkraftanforderungen kann es jedoch auch zweckmäßig sein, wenn das Abtriebsende zumindest über einen Teil der axialen Erstreckung seiner Fügefläche wenigstens einen, vorzugsweise jedoch mehrere in Umfangsrichtung verteilte, axiale Schlitze aufweist.

Die Fügeflächen des Abtriebendes der Kurbelwelle und der Eingangskomponente der Kupplung haben zweckmäßigerweise kreiszylindrische Form oder aber selbsthemmend konische Form. In beiden Fällen muß die Eingangskomponente nicht zusätzlich durch gesonderte Maßnahmen axial am Abtriebsende der Kurbelwelle gesichert werden. Insbesondere kreiszylindrische Flächen haben den Vorteil, daß durch einander zugeordnete axiale Ringanschlagflächen der Eingangskomponente und des Abtriebsendes eine exakte axiale Positionierung der Eingangskomponente relativ zur Kurbelwelle erreicht werden kann.

Die im vorstehenden erläuterten Preßsitzkupplungen haben sämtlich den Vorteil, daß der Wellendurchmesser der Kurbelwelle im Bereich der motorgehäuseseitigen Kurbelwellenabdichtung kleiner als bisher in der Praxis üblich bemessen werden kann. Insbesondere kann erreicht werden, daß der Innendurchmesser der hierfür vorgesehenen Dichtringanordnung zumindest annähernd gleich dem Außendurchmesser der Fügefläche des Abtriebsendes der Kurbelwelle und/oder des Innendurchmessers des Kurbelwellenlagers oder sogar kleiner als der Innendurchmesser des Kurbelwellenlagers bemessen werden kann. Auf diese Weise kann unter Beachtung der mechanischen Festigkeitsanforderungen an die Kurbelwelle die Reibung der Dichtringanordnung minimiert werden.

Der Bereich der Fügeöffnung der Eingangskomponente der Kupplung muß die radialen Preßkräfte aufnehmen können, sollte also vergleichsweise stabil sein. Andererseits wird insbesondere für die Verwendung als Schwungrad angestrebt, daß die Masse der Eingangskomponente radial möglichst weit außen angeordnet ist. In einer bevorzugten Ausgestaltung ist deshalb vorgesehen, daß die Eingangskomponente eine ringförmige, die Fügefläche der Eingangskomponente bildende Nabe hat, von der ein, bezogen auf die axiale Erstreckung der Nabe, dünner scheibenförmiger Flansch absteht. Die Nabe und der Flansch können integral verbunden sein, vorzugsweise ist der Flansch jedoch als Blechformteil ausgebildet, das an der gesondert davon hergestellten Nabe angeschweißt oder angenietet ist.

Die Nabe soll nicht nur die radialen Preßkräfte aufnehmen können, sondern auch die Eingangskomponente der Kupplung kippfehlerfrei gleichachsig am Abtriebsende der Kurbelwelle rühren. Dies läßt sich relativ einfach dadurch erreichen, daß von der Nabe ein Rohransatz absteht, dessen radiale Wanddicke kleiner ist, als die radiale Dicke der Nabe, wobei sich die Fügefläche der Eingangskomponente in den Rohransatz hineinerstreckt. Während der dickere Bereich der Nabe den Hauptteil der radialen Preßkräfte aufnimmt, verbessert der Rohransatz die Zentrierung, ohne daß der für die Abdichtung der Kurbelwelle gegenüber dem Motorgehäuse maßgebende Durchmesser wesentlich vergrößert werden müßte. Die Abdichtung kann deshalb auch am Außenumfang des Rohransatzes und damit der Eingangskomponente der Kupplung eng benachbart erfolgen.

Zwischen den Fügeflächen der Eingangskomponente der Kupplung und des Abtriebsendes der Kurbelwelle kann sich im Betrieb Passungsrost bilden. Passungsrost kann die Demontage der Eingangskomponente erschweren und unter Umständen das von der Preßsitzkupplung übertragbare Drehmoment mindern. Um dies zu verhindern, ist in einer bevorzugten Ausgestaltung vorgesehen, daß die Fügeflächen zusätzlich versiegelt sind. Die Versiegelung kann durch eine geeignete Beschichtung einer der Fügeflächen mit einem Rauhigkeitsspalte ausgleichenden Material erreicht werden. Bevorzugt sind jedoch die Fügeflächen miteinander verklebt. Der nach dem Zusammenbau aushärtende Klebstoff versiegelt nicht nur die Fügeflächen und verhindert dementsprechend Passungsrost, sondern bildet zugleich eine Art Gleitmittel bei der Montage. Nicht zuletzt kann durch die Verklebung im Einzelfall auch das übertragbare Drehmoment erhöht werden.

Durch geeignete Wahl des Klebematerials kann sichergestellt werden, daß die Verklebung durch definierte Kräfte wieder gelöst werden kann. Ggf. können thermisch lösbare Klebematerialen verwendet werden.

Um die zum Schließen oder Öffnen der Preßsitzkupplung erforderlichen axialen Kräfte gering zu halten, kann speziell bei konischen Spreizelementen vorgesehen sein, daß zumindest eine der beiden einander zugeordneten Spannflächen der Preßsitzkupplung mit einem reibungsmindernden Gleitmittel beschichtet ist oder aus einem Sintermaterial besteht, welches Schmierstoff enthält.

Es versteht sich, daß die Erfindung nicht nur bei Reibungskupplungen eingesetzt werden kann, deren Eingangskomponente ein einteiliges Schwungrad umfaßt, sondern deren Schwungrad ein sogenanntes Zweimassenschwungrad mit zwei relativ zueinander verdrehbaren und drehelastisch miteinander gekuppelten Schwungmassen bildet, von denen eine mit der Kurbelwelle zu verbinden ist und die andere die Druckplatteneinheit trägt.

Wie bereits vorstehend erläutert, besteht vielfach der Wunsch, Reibungskupplungen auch dann einfach und für eine betriebssichere Übertragung hoher Drehmomente an der Kurbelwelle montieren zu können, wenn die Eingangskomponente und die als Kupplungsscheibe ausgebildete Ausgangskomponente der Reibungskupplung bereits vor der Montage an der Kurbelwelle zu einer Baueinheit vereinigt sind (Modulkupplung). Dies läßt sich in einer bevorzugten Ausgestaltung dadurch erreichen, daß der Preßsitzkupplung zum radialen Verspannen der Fügeflächen axial belastbare Werkzeugangriffsflächen zugeordnet sind, die durch eine Nabe der Kupplungsscheibe hindurch axial zugänglich sind und/oder an die die Nabe der Kupplungsscheibe anlegbar ist und von denen wenigstens eine an dem Spreizelement vorgesehen ist.

Ähnlich den vorstehend erläuterten herkömmlichen Befestigungsanordnungen die auf einer Zentralverbindung, beruhren kann auch hier die Preßsitzkupplung über zentral angreifende Werkzeuge axial durch die Komponenten der Reibungskupplung hindurch geschlossen werden. Während aber bei herkömmlichen Zentralverbindungen beim Anziehen der Zentralschraube ein Drehmoment auf die an sich drehbare Kurbelwelle ausgeübt wird und damit Vorkehrungen getroffen werden müssen, um das Reaktionsmoment der Kurbelwelle beispielsweise über das lediglicIn durch Indexstifte oder dgl. vorfixierte Schwungrad ableiten zu können, geht die Ausgestaltung der Erfindung einen anderen Weg, indem hier die Preßsitzkupplung unmittelbar durch axiale Kräfte geschlossen wird. Es hat sich gezeigt, daß axiale Kräfte hinsichtlich der Ableitung der Reaktionskräfte der Kurbelwelle, nicht zuletzt wegen der großen Masse der Kurbelwelle, leicht beherrschbar sind. Die Preßsitzkupplung kann ohne weiteres so bemessen werden, daß der Preßsitz nicht nur im Betrieb das Drehmoment überträgt, sondern auch in den meisten Fällen ohne zusätzliche Sicherungsmaßnahmen für die axiale Sicherung der Reibungskupplung an der Kurbelwelle sorgt. Durch geeignete Gestaltung der Werkzeugangriffsflächen können diese auch für die Demontage ausgenützt werden. Die erfindungsgemäße Befestigung eignet sich insbesondere für Modulkupplungen, deren Kupplungsgehäuse betriebsmäßig unlösbar mit einem die Eingangskomponente bildenden Schwungrad verbunden ist.

In der bevorzugten Ausgestaltung weist die Eingangskomponente wiederum eine an ihren Innenumfang eine der Fügeflächen bildende zentrische Öffnung auf, in die das Abtriebsende der Kurbelwelle mit einem die andere der beiden Fügeflächen bildenden Bereich eingreift. Das Abtriebsende enthält hierbei die zentrische Stirnöffnung, in der auch hier ein das Abtriebsende radial nach außen gegen die Eingangskomponente spannendes Spreizelement sitzt und zumindest das Spreizelement weist eine axial belastbare Werkzeugangriffsfläche auf. Das Spreizelement hat vorzugsweise einen konusförmigen Außenmantel, dem in der Stirnöffnung ein konusförmiger Innenmantel zugeordnet ist. Der konsuförmige Innenmantel kann direkt durch die Stirnöffnung gebildet sein oder aber an einer in die Stirnöffnung eingesetzten Konushülse angeformt sein. Als Werkzeugangriffsflächen der Preßsitzkupplung können axiale Stirnflächen des Spreizelements oder des Abtriebsendes der Kupplung dienen, in die die axialen Kräfte entweder direkt oder aber indirekt über dazwischen angeordnete Komponenten, beispielsweise die Nabe der Kupplungsscheibe oder ggf. vorhandene Ringansätze der Eingangskomponente eingeleitet werden. Geeignet als Werkzeugangriffsflächen sind insbesondere jedoch auch Innengewinde zentraler Gewindelöcher sowohl der Kurbelwelle als auch des Spreizelements.

Bei der vorstehen erläuterten Variante wird der radiale Preßsitz durch das die kurbelwellenseitige Fügefläche radial aufweitende Spreizelement erzeugt. Die einander zugeordneten Passungstoleranzen der beiden Fügeflächen können damit in einer Fügepassung oder ggf. einer Übergangspassung zueinander stehen, so daß die Eingangskomponente mehr oder weniger lose auf das Abtriebsende der Kurbelwelle aufgesteckt werden kann.

Im folgenden sollen Ausführungsbeispiele der Erfindung anhand einer Zeichnung näher erläutert werden. Hierbei zeigt:
- Fig. 1: einen Axiallängsschnitt durch eine Modulkupplung, die mittels einer axial betätigbaren Preßsitzkupplung am Abtriebsende einer Kurbelwelle der Brennkraftmaschine eines Kraftfahrzeugs befestigt ist;
- Fig. 2-7: Varianten von Preßsitzkupplungen, wie sie alternativ für die Befestigung der Modulkupplung nach Fig. 1 einsetzbar sind und
- Fig. 8: einen Axiallängsschnitt durch den kurbelwellenseitigen Endbereich einer hydrodynamischen Kupplung oder eines Drehmomentwandlers.

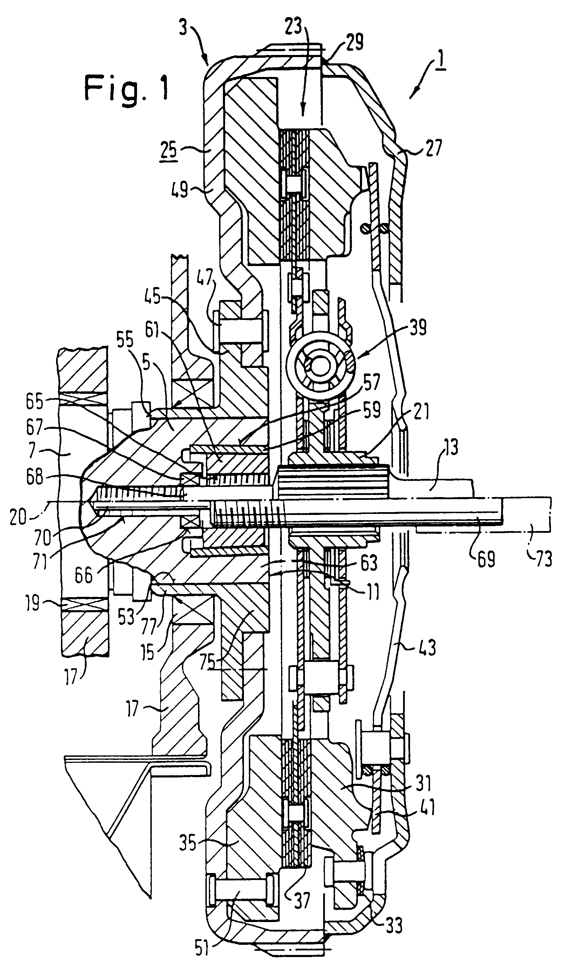

Fig. 1 zeigt eine Reibungskupplung 1, deren allgemein mit 3 bezeichnete Eingangskomponente an einem Abtriebsende 5 einer Kurbelwelle 7 einer Brennkraftmaschine eines Kraftfahrzeugs mittels einer Preßsitzkupplung 11 befestigt ist. Bei der Reibungskupplung 1 handelt es sich um eine im Antriebsstrang des Kraftfahrzeugs zwischen der Brennkraftmaschine und einem nachfolgenden Schaltgetriebe, dessen Eingagnswelle bei 13 angedeutet ist, angeordnete Schaltkupplung. Das Abtriebsende 5 der Kurbelwelle 7 ist mittels einer Dichtringanordnung 15 gegenüber einem Motorgehäuse 17 der Brennkraftmaschine abgedichtet und in einem Kurbelwellenlager 19 im Bereich der Dichtringanordnung 15 an dem Motorgehäuse 17 um eine Drehachse 20 gleichachsig zur Eingangswelle 13 des Getriebes drehbar gelagert.

Die Reibungskupplung 1 ist als "Modulkupplung" ausgbildet, so daß sie einschließlich ihrer im Betrieb mittels einer Nabe 21 drehfest, aber axial verschiebbar auf der Eingangswelle 13 sitzenden Kupplungsscheibe 23 als Baueinheit am Abtriebsende 5 der Kurbelwelle 7 befestigt werden kann. Die Kupplung 1 umfaßt als Bestandteil der Eingangskomponente 3 ein Schwungrad 25, an welchem ein Kupplungsgehäuse 27 befestigt, hier bei 29 angeschweißt ist. An dem Kupplungsgehäuse 27 ist eine im wesentlichen ringscheibenförmige Anpreßplatte 31 beispielsweise mittels Tangentialblattfedern 33 drehfest, aber axial beweglich gelagert. Die Anpreßplatte 31 nimmt zwischen sich und einer Gegenanpreßplatte 35 des Schwungrads 25 Reibbeläge 37 der Kupplungsscheibe 23 auf, die in herkömmlicher Weise über einen Drehschwingungsdämpfer 39 mit der Nabe 21 drehelastisch gekuppelt sind. Eine an dem Kupplungsgehäuse 27 gehaltene Membranfeder 41 spannt die Anpreßplatte 31 über die Reibbeläge 37 reibschlüssig gegen das Schwungrad 25. Über einen nicht näher dargestellten, auf Federzungen 43 der Membranfeder 41 wirkenden Ausrücker kann die Anpreßplatte 31 entlastet und die Kupplung ausgerückt werden.

Es versteht sich, daß die in Fig. 1 dargestellte Kupplung 1 lediglich ein Beispiel einer im Rahmen der Erfindung verwendbaren Kupplung darstellt. Anstelle der betriebsmäßig nicht lösbaren Schweißverbindung 29 kann das Kupplungsgehäuse 27 auch an dem Schwungsrad 25 angeschraubt sein. Um die durch die Erfindung erzielbaren Vorteile zu ereichen, genügt es, wenn das Schwungrad 25 zusammen mit der Kupplungsscheibe 23 und der aus der Anpreßplatte 31, dem Kupplungsgehäuse 27 und der Membranfeder 41 bestehenden "Druckplatteneinheit" zu einer Baueinheit zusammengefaßt ist, die als solche am Abtriebsende 5 der Kurbelwelle 7 in einem Arbeitsgang anbaubar ist. Das Schwungrad 25 besteht im dargestellten Ausführungsbeispiel aus einem an einer Nabe 45 mit Hilfe mehrerer Niete 47 befestigten Blechformteil 49, an welchem die beispielsweise als Gußformteil ausgebildete Gegenanpreßplatte 35 bei 51 angenietet ist.

Die Nabe 45 enthält zentrisch zur Drehachse 21 eine Öffnung 53, in die das Abtriebsende 5 eingreift. Der Innenmantel der Öffnung 53 und der Außenmantel des Abtriebsendes 5 bilden einander zugeordnete, kreiszylindrische Fügeflächen, die bei unverspannter Preßsitzkupplung 11 mit einer Fügepassung oder ggf. einer Übergangspassung ineinandersitzen. Eine axiale Ringschulter 55 des Abtriebsendes 5 bildet eine axiale Anschlagfläche für die axiale Positionierung der Nabe 45. In einer zentrischen, kreiszylindrischen Stirnöffnung 57 des Abtriebsendes 5 sitzt eine an ihrem Außenmantel gleichfalls kreiszylindrische Konushülse 59, deren Innenmantel sich konusförmig von der Kurbelwelle 7 axial weg verjüngt. In der Konushülse 59 ihrerseits sitzt ein Spreizelement in Form eines Spreizkonus 61, dessen konische Außenmantel über die Konushülse 59 den die Stirnöffnung 57 bildenden Rohrabschnitt 63 des Abtriebsendes 5 radial aufweitet, wenn der Spreizkonus 61 relativ zur Konushülse 59 von der Kurbelwelle 7 axial weggerichtet gezogen wird. Der sich hierbei aufweitende Rohrabschnitt 63 spannt die anfänglich lediglich in Form der Fügepassung bzw. Übergangspassung aneinanderliegenden Fügeflächen zwischen Abtriebsende 5 und Nabe 45 in einer Preßpassung gegeneinander, die das Drehmoment von der Kurbelwelle 7 auf das Eingangsteil 3 der Reibungskupplung 1 überträgt.

Der Konuswinkel der Konushülse 59 bzw. des Spreizkonus 61 sind so klein bemessen, daß zwischen diesen beiden Teilen Selbsthemmung auftritt, was eine zusätzliche axiale Fixierung des Spreizkonus 61 relativ zur Kurbelwelle 7 erübrigt. Der Spreizkonus 61 enthält darüber hinaus eine zentrische, durchgehende Gewindebohrung 65, hinter der auf der kupplungsfernen Seite des Spreizkonus 61 in einer zentrischen Aussparung 66 im Boden der Stirnöffnung 57 ein Pilotlager 67 für die in Fig. 1 lediglich mit ihrer oberen Hälfte dargestellte Getriebeeingangswelle 13 anschließt. Das Pilotlager 67 hat einen kleineren Innendurchmesser als die Gewindebohrung 65 und führt die Eingangswelle 13 an einem durch die Gewindebohrung 65 im montierten Zustand hindurchreichenden Zapfen 68.

Für die Montage wird die Reibungskupplung 1 mit der Nabe 45 auf das Abtriebsende 5 aufgesteckt und es wird, vor der Montage des Getriebes, durch die Nabe 21 der Kupplungsscheibe 23 hindurch eine endseitig mit einem Gewinde versehene Zugstange 69 in die Gewindebohrung 65 des Spreizkonus 61 eingeschraubt, über die der Spreizkonus 61 in seine die Preßsitzkupplung 11 schließende Stellung axial gezogen wird. Die Zugstange 69 kann, wie bei 70 dargestellt, einen durch das Pilotlager 67 durchtretenden Fortsatz haben, der sich am Boden einer die Stirnöffnung 57 in die Kurbelwelle hinein verlängernden Gewindebohr 71 abstützen kann. Durch Einschrauben der Zustange 69 in die Gewindebohrung 65 kann der Spreizkonus 61 in seine Schließstellung gezogen werden, ohne daß aus der Kurbelwelle 7 Reaktionskräfte abgeleitet werden müßten. Die axialen Schließkräfte werden impulsartig auf die Zugstange 69 ausgeübt, was den Vorteil hat, daß die Reaktionskräfte vom vergleichsweise großen axialen Massenträgheitsmoment der Kurbelwelle 7 aufgenommen werden und sich eine axiale Abstützung der Kurbelwelle 7 gegebenenfalls erübrigt. In entsprechender Weise können für die Demontage über die Stange 69 Druckkräfte auf den Spreizkonus 61 ausgeübt werden. Die an die Stirnöffnung 59 anschließende Gewindebohrung 71 erlaubt es jedoch in jedem Fall, Reaktionskräfte von der Kurbelwelle 7 abzuleiten, indem in die Gewindebohrung 71, deren Durchmesser kleiner ist als derjenige der Gewindebohrung 65, eine Zugstange ähnlich der Stange 69 durch die Nabe 21 der Kupplungsscheibe 23 hindurch eingeschraubt wird. Bei der Demontage kann über diese Stange eine Zugkraft auf die Kurbelwelle 7 ausgeübt werden, während der Spreizkonus 61 axial gelöst wird. Auch bei Montage können Reaktionsdruckkräfte über diese Stange übertragen werden, wenn anstelle der Stange 69 eine bei 73 angedeutete Hülse in die Gewindebohrung 65 des Spreizkonus 61 eingeschraubt wird. Die Hülse 73 und die in die Gewindebohrung 71 eingeschraubte Stange übertragen durch die Nabe 21 hindurch Kräfte eines entweder impulsartig oder aber auch stetig arbeitenden Werkzeugs, wie zum Beispiel einer hydraulischen Presse.

Die Nabe 45 des Eingangsteils 3 hat einen, beispielsweise aus Stahl bestehenden Ring 75, der den überwiegenden Teil der radialen Preßkräfte aufnimmt. Der Ring 75 ist in axialer Richtung dicker als die Wandstärke des daran angenieteten Blechformteils 49, um trotz der erhöhten Festigkeit nur einen vergleichsweisen geringen Beitrag zum Gesamtgewicht, bezogen auf das Massenträgheitsmoments des Schwungrads 25 zu liefern. Von dem Ring 75 steht axial der Kupplung 1 gegenüberliegend ein Rohransatz 77 integral ab, der die Fügefläche des Rings 75 axial verlängert und so für eine kippfehlerfreie, gleichachsige Führung des Schwungrads 25 am Abtriebsende 5 sorgt.

Die Dichtanordnung 15 dichtet das Motorgehäuse 17 relativ zum zylindrischen Außenumfang des Rohransatzes 77 ab. Da die radiale Wandstärke des Rohransatzes 77 vergleichsweise gering ist, wird der Innendurchmesser der Dichtanordnung 15 gegenüber dem Durchmesser der Fügefläche des Abtriebsendes 5 nur unwesentlich erhöht. Der Innendurchmesser der Dichtanordnung 15 ist damit im wesentlichen gleich dem Lagerdurchmessers des Kurbelwellenhauptlagers 19 bzw. etwas größer. Aufgrund des vergleichsweisen kleinen Dichtringdurchmessers ergibt sich eine nur geringe Dichtringreibung, was insgesamt gesehen zu einer Kraftstoffersparnis führt. Ferner führt der verringerte Dichtringdurchmesser zu einer Verkleinerung der Umfangsgeschwindigkeit, was die Lebensdauer der Dichtanordnung 15 erhöht.

Im folgenden werden Varianten der Preßsitzkupplung erläutert. Gleichwirkende Komponenten sind mit den Bezugszahlen der Fig. 1 und zur Unterscheidung mit einem Buchstaben versehen. Zur Erläuterung wird jeweils auf die Beschreibung von Fig. 1 Bezug genommen.

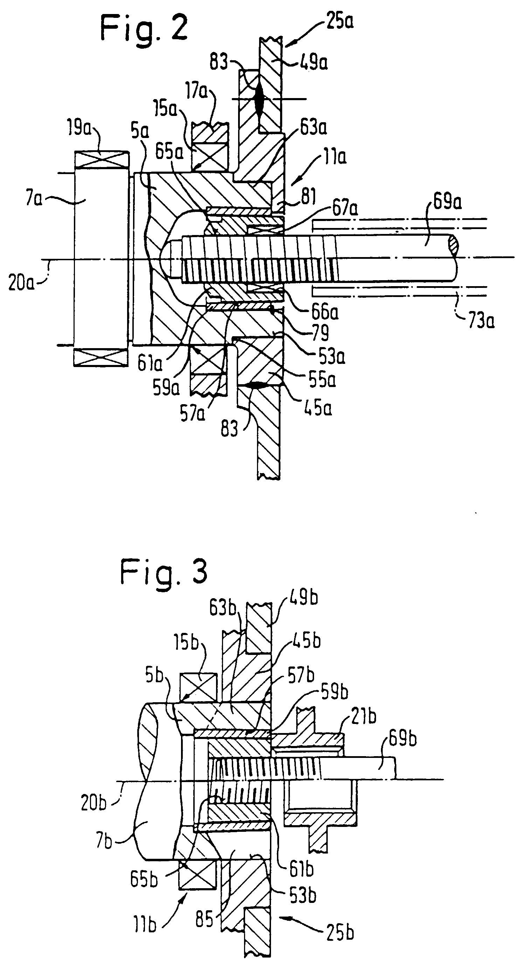

Bei der Preßsitzkupplung 11 der Fig. 1 ist die Konushülse 59 relativ zur Kurbelwelle 7 in Auszugsrichtung des Spreizkonus 61 in axialer Richtung lediglich durch Reibschluß fixiert. Der Spreizkonus 61 wird vor dem Aufsetzen des Schwungrads 25 auf das Abtriebsende 5 geringfügig gespannt, so daß die Konushülse 59 bereits anfänglich reibschlüssig in der Stirnöffnung 57 sitzt. Fig. 2 zeigt in ihrer unteren Hälfte eine Ausgestaltung einer Preßsitzkupplung 11a, bei der die Konushülse 59a durch einen in die Stirnöffnung 57a des Abtriebsendes 5a der Kurbelwelle 7a eingesetzten Sicherungsrings 79 gegen axiales Herausziehen gesichert ist. In der oberen Hälfte wird die Konushülse 59a durch einen nach radial Innen vorstehenden Ringflansch 81 der Nabe 45a gesichert. Da verhäitnismäßig geringe Sicherungskräfte erforderlich sind, können diese auch über das Schwungrad 25a von außen aufgebracht werden.

Im Unterschied zur Preßsitzkupplung der Fig. 1 hat die Nabe 45a des Schwungrads 25a keinen axialen Rohransatz, so daß cie Dichtringanordnung 15a unmittelbar auf einen zylindrischen Außenumfang des Abtriebsendes 5a aufsitzt. Aber auch hier ist der Innendurchmesser der Dichtringanordnung 15a etwa gleich dem Lagerdurchmesser des Kurbelwellenlagers 19a bzw. dem Fügedurchmesser der Öffnung 53a.

Zum Spannen der Preßsitzkupplung 11a wird in die Gewindebohrung 65a des Spreizkonus 61a eine endseitig mit einem Gewinde versehene Stange 69a durch die nicht näher dargestellte Nabe der Kupplungsscheibe hindurch eingeschraubt. Die Stange 69a stützt sich mit ihrem Ende am Boden der Stirnöffnung 57a ab und vermag den Spreizkonus 61a nach axial außen zu schrauben.

Zum Lösen des Spreizkonus 61a dient wiederum eine axial durch die Nabe der Kupplungsscheibe eingeführte Hülse 73a oder die Stange 69a, die axial durch Impulskräfte belastet wird.

Fig. 2 zeigt ferner als Variante zu Fig. 1, daß das Blechformteil 49a des Schwungrads 25a an einer axial verlaufenden Fügefläche (untere Hälfte) oder einer radial verlaufenden Fügefläche (obere Hälfte in Fig. 2) durch Schweißverbindungen 83 an der Nabe 45a befestigt ist. Fig. 2 zeigt ferner, daß das Pilotlager 67a im Unterschied zu Fig. 1 in eine zentrische Öffnung 66a des Spreizkonus 61a eingesetzt ist. Das Pilotlager 67a ist auf der zur Kupplung gelegenen Seite der Gewindebohrung 65a angeordnet und hat einen Innendurchmesser größer als der Durchmesser der Gewindebohrung 65a.

Fig. 3 zeigt eine weitere Variante, bei welcher die Nabe 21b der Kupplungsscheibe gegenüber ihrer im Abstand vom Abtriebsende 5b gelegenen Position (wie sie in der unteren Hälfte von Fig. 3 dargestellt ist) bis in eine an einer axialen Stirnfläche der Konushülse 59b anliegende Stellung bewegbar ist. In dieser Stellung wird die Nabe 21b als von außen her zugestellter Anschlag für die Konushülse 59b während des Spannens der Preßsitzkupplung 11b ausgenützt. Das axiale Bewegungsspiel der Nabe 21b kann, sofern axiale Federungen der Kupplungsscheibe, beispielsweise deren Belagfederung hierfür nicht ausreichen, durch zusätzliche Federelemente bereitgestellt werden. Für die Spannbewegung des Spreizkonus 61b wird wiederum durch die Nabe 21b hindurch eine Zugstange 69b in die Gewindebohrung 65b des Spreizkonus 61b eingeschraubt.

Der durch die Stirnöffnung 57b im Abtriebsende 5b der Kurbelwelle 7b gebildete Rohransatz 63b Ist durch mehrere in Umfangsrichtung verteilte, axiale Schlitze 85 in axial sich erstreckende Zungen bzw. Segmente unterteilt. Durch diese Maßnahme werden die zum Aufweiten des Rohransatzes 63b erforderlichen Spannkräfte vermindert.

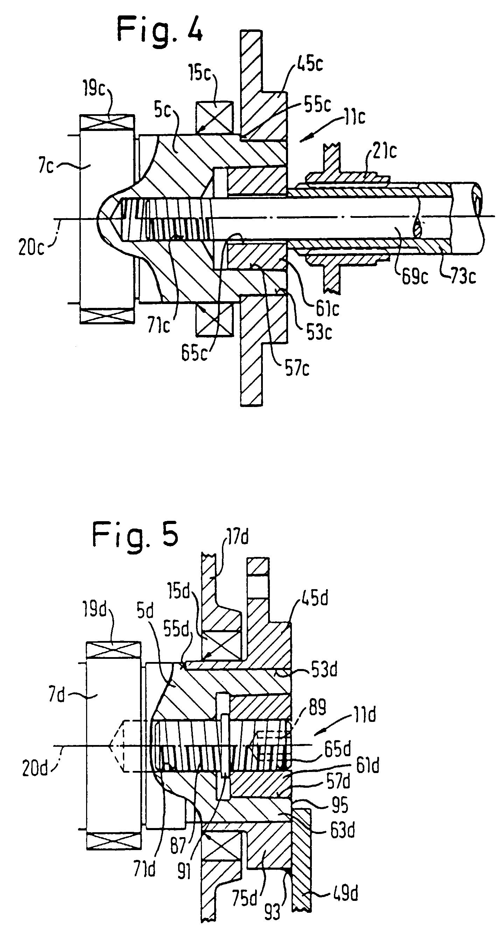

Fig. 4 zeigt eine Variante, die sich von den vorstehend erläuterten Ausführungsformen dadurch unterscheidet, daß die Stirnöffnung 57c des Abtriebsendes 5c der Kurbelwelle 7c eine zur Kurbelwelle hin sich verjüngende Konusfläche bildet, in die der Spreizkonus 61c direkt, d.h. ohne Konushülse eingesetzt ist. Die Preßsitzkupplung 11c wird in diesem Fall durch axiales Eindrücken des Spreizkonus 61c in die Stirnöffnung 57c gespannt. Fig. 4 zeigt die hierfür bei der Montage der Kupplung benutzten Werkzeuge. Durch die Nabe 21c der Kupplungsscheibe hindurch wird eine Zugstange 69c in die zur Stirnöffnung 57c zentrische Gewindebohrung 71c der Kurbelwelle 7c eingeschraubt. Die Stange 69c nimmt die Reaktionskräfte eines koaxial dazu durch die Nabe 21c tretenden, den Spreizkonus 61c axial belastenden Druckrohrs 73c auf. Das Spannen der Preßsitzkupplung 11c kann mittels eines zwischen der Stange 69c und dem Druckrohr 73c angreifenden Hydraulikzylinders erfolgen, aber auch im Impulsbetrieb über das Druckrohr 73c allein. Für die Demontage enthält der Spreizkonus 61c eine Gewindebohrung 65c über die der Spreizkonus 61c ausgezogen werden kann. Soweit die Nabe 21c hinreichend axial ausgelenkt werden kann und mit dem Spreizkonus 61c radial überlappt, können die axialen Spannkräfte auch über die Nabe 21c auf den Spreizkonus 61c übertragen werden.

Fig. 5 zeigt eine Variante einer Preßsitzkupplung 11d, bei welcher der Spreizkonus 61d ähnlich der Ausführungsform nach Fig. 4 unmittelbar in einer zur Kurbelwelle 7d hin axial sich verjüngenden Stirnöffnung 57d des Abtriebendes 5d sitzt. Der Spreizkonus 61d hat wiederum eine zentrische Gewindeöffnung 65c und auch die Stirnöffnung 57d ist durch eine gleichachsige Gewindebohrung 71d verlängert. Die Gewindebohrungen 65d und 71d haben jedoch entgegengesetzten Windungssinn und nehmen eine Differenzgewindeschraube 87 auf, deren zentrische Schlüsselflächen 89 durch die nicht dargestellte Nabe der Kupplungsscheibe hindurch für ein Schraubwerkzeug zugänglich sind. Durch Drehen der Differenzgewindeschraube 87 kann der Spreizkonus 61d in den Innenkonus der Stirnöffnung 57d eingezogen und die Preßsitzkupplung geschlossen werden. Axial zwischen den Gewindebohrungen 65d, 71d trägt die Differenzgewindeschraube 87 einen radial abstehenden und mit der benachbarten Stirnfläche des Spreizkonus 61d überlappenden Ringbund 91.

In einer Variante können die zur Aufnahme der Differenzgewindeschraube 87 vorgesehenen Gewindebohrungen 65d und 71d gleichen Windungssinn, jedoch unterschiedliche Gewindesteigungen haben. Diese Variante hat den Vorteil, daß sich mit vergleichsweise einfachen Mitteln eine Axialkraftübersetzung erreichen läßt.

In ihrer unteren Hälfte zeigt Fig. 5 eine noch weitere Variante für die Befestigung des Blechformteils 49d an der Nabe 45d. Das Blechformteil 49d überlappt den Ring 75d der Nabe 45d und ist durch eine von radial außen hergestellte Kehlschweißnaht 93 angebracht. Nach radial innen ragt das Blechformteil 49d über den Ring 75d hinaus und überlappt mit einer axialen Stirnfläche 95 des durch die Stirnöffnung 57d gebildeten Rohransatzes 63d. Die Stirnfläche 95 bildet einen Axialanschlag für die Positionierung des Schwungrads relativ zur Kurbelwelle als Ersatz der in der oberen Hälfte von Fig. 5 dargestellten Schulter 55d.

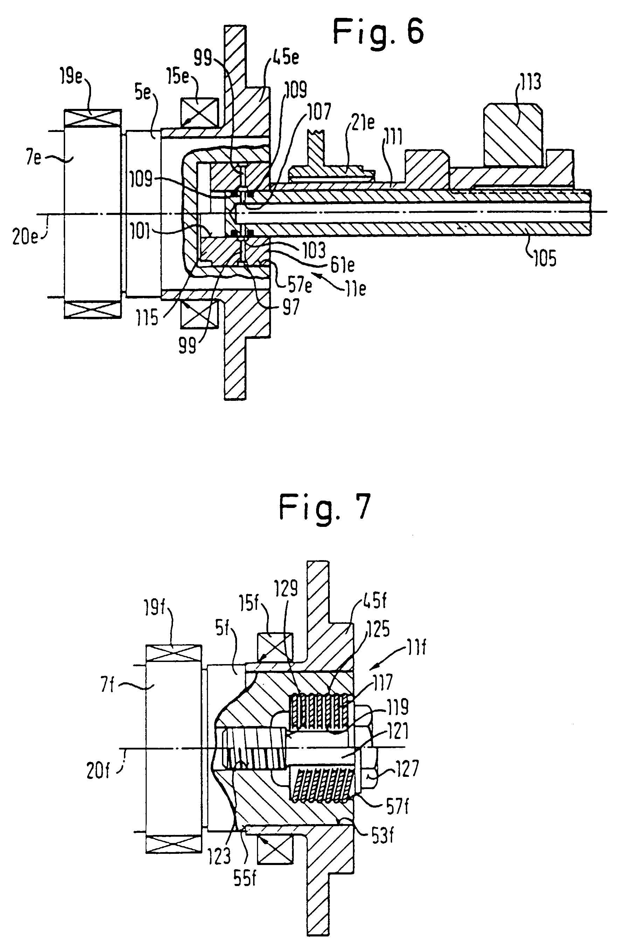

Fig. 6 zeigt eine Ausführungsform mit einem direkt in eine zentrische, innen konische Stirnöffnung 57e des Abtriebsendes 5e der Kurbelwelle 7e eingesetzten Spreizkonus 61e, die auch bei Ausführungsformen mit zusätzlicher Konushülse verwendet werden kann. Der Spreizkonus 61e enthält in seinem konischen Außenmantel eine umlaufende Ringnut 97, die durch einen oder mehrere radiale Kanäle 99 mit einer am Innenumfang einer zentrischen Bohrung 101 des Spreizkörpers 61e angeordneten Ringnut 103 verbunden ist. Die Bohrung 101 bildet einen Druckmittelanschluß für ein stirnseitig verschlossenes Hydraulikdruckrohr 105, das zum Lösen des Spreizkonus 61e in die Bohrung 101 eingeführt wird. Das Hydraulikdruckrohr 105 hat im Bereich seines geschlossenen Endes radiale Auslässe 107, die durch Dichtringe 109 gegen die Bohrung 101 beiderseits der radialen Kanäle 99 abgedichtet werden. Über das Hydraulikdruckrohr 105 kann die radial äußere Ringnut 97 hydraulisch belastet und der Preßsitz des Spreizkonus 61e gelöst werden.

Fig. 6 zeigt ferner Einzelheiten einer Schlagvorrichtung zum Spannen der Preßsitzkupplung 11e. Die Schlagvorrichtung umfaßt eine auf dem Hydraulikdruckrohr 105 verschiebbar geführte, gleichfalls durch die Nabe 21e der Kupplungsscheibe tretende und am Spreizkonus 61e mit einem Ende anliegende Hülse 111, der ein axial beweglicher Schlagring 113 zugeordnet ist. Um zu verhindern, daß der Spreizkonus 61e zu weit in die Stirnöffnung 57e eingetrieben wird, kann, wie in der unteren Hälfte von Fig. 6 dargestellt ist, der Spreizkonus 61e mit einem axialen Vorsprung 115 versehen sein, mit dem er am Boden der Stirnöffnung 57e anschlägt. Der Schlagring erlaubt eine impulsförmige Axialbelastung des Spreizkonus 61e beim Spannen der Preßsitzkupplung 11e. Es versteht sich, daß die vorstehend erläuterten Methoden zur Ableitung von Reaktionskräften aus der Kurbelwelle 7e auch in der Variante der Fig. 6 angewandt werden können, insbesonsere kann die zur Ableitung der Reaktionskräfte in eine zentrische Gewinde fortsetzung der Stirnöffnung 57e durch die Nabe 21e hindurch geschraubte Stange anstelle des Hydraulikdruckrohrs 105 die Führung der Hülse 111 übernehmen, nachdem das Hydraulikdruckrohr 105 in erster Linie Bestandteil eines Lösewerkzeugs ist.

Fig. 7 zeigt eine Ausführungsform, bei welcher die Spreizkupplung 11f für die radiale Aufweitung des Abtriebsendes 5f der Kurbelwelle 7f anstelle eines Spreizkonus ein Paket aus einer Vielzahl gleichachsig aneinanderliegender Tellerfedern 117 umfaßt. Die Tellerfedern 117 haben miteinander fluchtende, zentrische Öffnungen 119, durch die eine Spannschraube 121 tritt. Die Spannschraube 121 ist in eine Gewindebohrung 123 geschraubt, die sich an eine die Tellerfedern 117 aufnehmende, zentrische Stirnöffnung 57f des Abtriebsendes 5f der Kurbelwelle 7f anschließt. Die Stirnöffnung 57f hat einen mit einer Vielzahl Umfangsrillen 125 versehenen, im übrigen jedoch im wesentlichen zylindrischen Innenmantel. Der radial äußere Umfangsrand jeder Tellerfeder 117 ist gerundet und greift in eine der Rillen 125 ein. Kantenschäden an den Tellerfedern 117 werden auf diese Weise vermieden und auch die Haltekraft der Tellerfedern wird auf diese Weise erhöht.

Wie in Fig. 7 unten gezeigt, haben die Tellerfedern 117 im entspannten Zustand leicht konische Form und werden beim Anziehen der Spannschraube 121 unter Vergrößerung ihres Außendurchmessers ausgeflacht, wie dies in Fig. 7 oben dargestellt ist. Aufgrung der Durchmesservergrößerung der Tellerfedern 117 werden die Fügeflächen zwischen der Nabe 45f und dem Abtriebsende 5f radial verspannt. Die Spannschraube 121 hat Schlüsselflächen 127, die axial durch die nicht näher dargestellte Nabe der Kupplungsscheibe hindurch für ein Spannwerkzeug zugänglich sind. Um die Tellerfedern 125 leichter entspannen zu können, ist die Spannschraube 121 auf der zur Kurbelwelle 7f weisenden Seite mit einer Ringschulter 129 versehen, die mit dem Innenrad der Tellerfedern 117 überlappt und die Tellerfedern beim Herausschrauben der Spannschraube 121 herausdrückt.

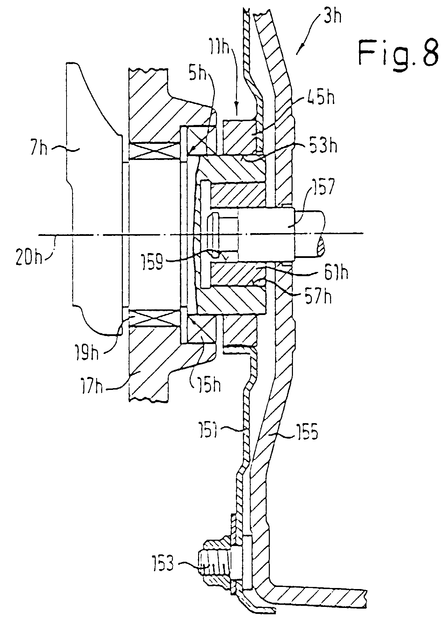

Die vorstehenden Ausführungsbeispiele wurden in Verbindung mit einer Modulkupplung erläutert. Es versteht sich, daß die Preßverbindungen auch bei herkömmlichen Kupplungen eingesetzt werden können, bei welchen zunächst lediglich das Schwungrad an der Kurbelwelle montiert wird, bevor die Druckplatteneinheit an dem Schwungrad angebaut wird. Fig. 8 zeigt ferner, daß Preßsitzkupplungen der erfindungsgemäß benutzten Art auch bei anderen Kupplungen, insbesondere einer hydrodynamischen Kupplung oder einem Drehmomentwandler mit Vorteil eingesetzt werden können wobei zur Vereinfachung der Darstellung die erfindungsgemäßen radial verlaufenden Ringanschlagflächen zur axialen Positionierung nicht eingezeichnet sind. Fig. 8 zeigt eine Preßsitzkupplung 11h, mit der eine Nabe 45h eines allgemein mit 3h bezeichneten Eingangsteils der Kupplung am Abtriebsende 5h einer um eine Drehachse 20h drehenden Kurbelwelle 7h befestigt ist. Das Abtriebsende 5h bildet an seinem Außenumfang eine Fügefläche, mit der es in eine zentrische, eine zugeordnete Fügefläche bildende Öffnung 53h der Nabe 45h eingreift. In einer zentrischen, zur Kurbelwelle 7h hin axial sich verjüngenden Stirnöffnung 57h des Abtriebsendes 5h sitzt wiederum unmittelbar ein Spreizkonus 61h, wie dies anhand der Fig. 4 bereits erläutert wurde. Durch axiales Eintreiben des Spreizkonus 61h in die Stirnöffnung 57h wird das Abtriebsende 5h radial aufgeweitet und der Preßverband der Fügeflächen radial gespannt. Die Eingangskomponente 3h der Kupplung, bei dem es sich um eine hydrodynamische Kupplung oder einen Drehmomentwandler handeln kann, umfaßt ein an der Nabe 45h befestigtes, beispielsweise angeschweißtes, scheibenförmiges Blechformteil 151, an dem mit Schraubbolzen 153 ein Gehäuse 155 des Wandlers angeschraubt ist. Das Gehäuse 155 trägt einen Zentrierzapfen 157, der in einer zentrischen Bohrung 159 des Spreizkonus 61h radial geführt ist. Es versteht sich, daß anstelle des Zapfens 157 ggf. auch eine durch den Wandler hindurchgeführte Welle gelagert sein kann. Da auch bei dieser Ausführungsform der Innendurchmesser einer das Abtriebsende 5h der Kurbelwelle 7h gegen das Motorgehäuse 17h abdichtenden Dichtringanordnung im wesentlichen gleich dem Durchmesser des benachbarten Kurbelwellenlagers 19h bzw. des Fügeflächendurchmessers des Abtriebsendes 5h ist, kann der Dichtringdurchmesser sehr klein gehalten und sein Reibungsverhalten verbessert werden.

Bei den vorstehend erläuterten Ausführungsformen der Preßsitzkupplung werden die einander zugeordneten Fügeflächen reibschlüssig einander gehalten. Zusätzlich kann jedoch vorgesehen sein, daß die Fügeflächen oder auch die einander zugeordneten konusförmigen Flächen des Spreizkonus bzw. der ihm zugeordneten Konushülse und/oder der Stirnöffnung des Abtriebsendes miteinander verklebt sind. Die Verklebung erhöht einerseits das übertragbare Drehmoment und verhindert andererseits Passungsrost. Da der Klebstoff in flüssiger Form bei der Montage aufgebracht wird, dient er zugleich als Schmiermittel, das es erlaubt, die Fügeflächen nicht nur mit einer Fügepassung, sondern ggf. mit einer Übergangspassung zu dimensionieren. Bei einer Übergangspassung oder ggf. auch einer Preßpassung kann durch thermisches Aufweiten der Nabe der Eingangskomponente der Montagevorgang erleichtert werden.

In einer weiteren Variante kann vorgesehen sein, daß zumindest eine der beiden am Spannvorgang der Preßsitzkupplung beteiligten, konischen Komponenten mit einem reibungsmindernden Gleitmittel beschichtet ist oder aber aus einem Schmierstoff enthaltenden Sintermaterial besteht.

## Patentansprüche

1. Baugruppe, umfassend
eine um eine Drehachse (20) drehbare Kurbelwelle (7) einer Brennkraftmaschine eines Kraftfahrzeugs und eine an einem Abtriebsende (5) der Kurbelwelle (7) mittels einer Preßsitzkupplung (1) befestigte Eingangskomponente (3) einer als Reibungskupplung oder hydrodynamische Kupplung oder Drehmomentwandler ausgebildete Kupplung (1),
wobei die Eingangskomponente (3) und das Abtriebsende (5) einander zugeordnete, im wesentlichen axial verlaufende Fügeflächen am Innenumfang einer zentrischen Öffnung (53) der Eingangskomponente (3) einerseits und am Außenumfang eines in diese Öffnung (53) axial hineinreichenden Bereichs des Abtriebsendes (5) andererseits sowie einander zugeordnete, die Eingangskomponente (3) relativ zur Kurbelwelle (7) axial positionierende, radial verlaufende Ringanschlagflächen (55; 95) aufweisen,
**dadurch gekennzeichnet**,
daß die im wesentlichen axial verlaufenden Fügeflächen die drehmomentübertragenden Flächen der Preßsitzkupplung (11) bilden, wobei das Abtriebsende (5) der Kurbelwelle (7) eine zentrische Stirnöffnung (57) aufweist, in der ein die äußere Fügefläche des Abtriebsendes (5) radial nach außen gegen die innere Fügefläche der Eingangskomponente (3) spannendes Spreizelement (61; 117) sitzt, das den Außendurchmesser des Abtriebsendes (5) relativ zum Innendurchmesser eines radial gegenüberliegenden Bereichs der Stirnöffnung (57) durch Einleiten einer axialen Kraft in das Spreizelement (61; 117) aufspreizen kann.

2. Baugruppe nach Anspruch 1,
dadurch gekennzeichnet,
daß das Spreizelement (61) einen konischen Außenmantel und die Stirnöffnung (57) oder eine in die Stirnöffnung (57) eingesetzte Konushülse (59) dem konischen Außenmantel zugeordnet einen konischen Innenmantel hat.

3. Baugruppe nach Anspruch 2,
dadurch gekennzeichnet,
daß sich der konische Innenmantel der Stirnöffnung (57c, d, e, h) zur Kurbelwelle (7c, 5, e, h) hin verjüngt.

4. Baugruppe nach Anspruch 2,
dadurch gekennzeichnet,
daß sich der konische Innenmantel der Konushülse (59, a, b) von der Kurbelwelle (7, a, b) axial weg verjüngt.

5. Baugruppe nach Anspruch 4,
dadurch gekennzeichnet,
daß die Konushülse (59a) mittels eines Sicherungsrings (79) an der Kurbelwelle (7a) gegen axiales Herausziehen aus der Stirnöffnung (57a) gesichert ist.

6. Baugruppe nach Anspruch 4,
dadurch gekennzeichnet,
daß die Eingangskomponente (3a) der Kupplung eine mit der Konushülse (59a) radial überlappende, die Konushülse (59a) gegen axiales Herausziehen aus der Stirnöffnung (57a) sichernde Ringschulter (81) aufweist.

7. Baugruppe nach Anspruch 4,
dadurch gekennzeichnet,
daß die Nabe (21b) der Kupplungsscheibe mit einer von axial außen zugänglichen, axialen Stirnfläche der Konushülse (59b) radial überlappt, axial bis an die Stirnfläche der Konushülse (59b) heran verschiebbar ist und auf der von der Konushülse (59b) axial abgewandten Seite ebenfalls eine von axial außen zugängliche axiale Stirnfläche für den Angriff von Werkzeugmitteln hat.

8. Baugruppe nach einem der Ansprüche 1 bis 7,
dadurch gekennzeichnet,
daß das Spreizelement (61) eine von axial außen zugängliche zentrische, axiale Öffnung mit radial sich erweiternden Hinterschneidungsflächen für das Ansetzen von Werkzeugmitteln, insbesondere eine zentrische, axiale Gewindebohrung (65) aufweist.

9. Baugruppe nach einem der Ansprüche 1 bis 8,
dadurch gekennzeichnet,
daß das Spreizelement (61) eine von axial außen zugängliche durchgehende, zentrische axiale Öffnung (65) aufweist und die Stirnöffnung (57) in eine mit radial sich erweiternden Hinterschneidungsflächen versehen, zentrische, axiale Öffnung der Kurbelwelle (7), insbesondere in eine zentrische, axiale Gewindebohrung (71; 123) übergeht.

10. Baugruppe nach Anspruch 9,
dadurch gekennzeichnet,
daß der Durchmesser der zentrischen Öffnung (71) der Kurbelwelle (7) gleich oder kleiner ist als der Durchmesser der zentrischen Öffnung (65) des Spreizelements (61).

11. Baugruppe nach Anspruch 9 oder 10,
dadurch gekennzeichnet,
daß die beiden zentrischen Öffnungen als Gewindebohrungen (65d, 71d) mit einander entgegengesetztem Windungssinn ausgebildet sind und eine gemeinsame, von axial außen zugängliche Differenzgewindeschraube (87) aufnehmen.

12. Baugruppe nach Anspruch 9 oder 10,
dadurch gekennzeichnet,
daß die beiden zentrischen Öffnungen als Gewindebohrungen (65d, 71d) ausgebildet sind, unterschiedliche Gewindesteigungen haben und eine gemeinsame, von axial außen zugängliche Differenzgewindeschraube (87) aufnehmen.

13. Baugruppe nach Anspruch 11 oder 12,
dadurch gekennzeichnet,
daß die Differenzgewindeschraube (87) axial zwischen den beiden Gewindebohrungen (65d, 71d) einen gegen eine innere Stirnfläche des Spreizelements (61d) schraubbaren, radialen Vorsprung (91) aufweist.

14. Baugruppe nach Anspruch 9 oder 10,
dadurch gekennzeichnet,
daß die Stirnöffnung (57a) des Abtriebsendes (5a) der zentrischen Gewindebohrung (65a) des Spreizelements (61a) axial fluchtend gegenüberliegend eine Stützfläche für in die Gewindebohrung (65a) einschraubbare, es Spreizelement (61a) in Spannrichtung ziehende Werkzeugmittel (69a) bildet.

15. Baugruppe nach einem der Ansprüche 1 bis 10,
dadurch gekennzeichnet,
daß das Spreizelement (61) einen konischen Außenmantel und auf seiner der Kurbelwelle (7) fernen Seite eine von axial außen zugängliche axiale Stirnfläche, insbesondere für den Angriff von Werkzeugmittein hat.

16. Baugruppe nach Anspruch 15,
dadurch gekennzeichnet,
daß die Nabe (21b; 21c) der Kupplungsscheibe mit der axialen Stirnfläche des Spreizelemente (61b; 61c) radial überlappt, axial bis an die Stirnfläche heran verschiebbar ist und auf der dem Spreizelement (61b; 61c) axial fernen Seite ebenfalls eine von außen zugängliche axiale Stirnfläche für den Angriff von Werkzeugmitteln hat.

17. Baugruppe nach einem der Ansprüche 2 bis 16,
dadurch gekennzeichnet,
daß einer der konischen Mäntel, insbesondere der konische Außenmantel des Spreizelements (61e) wenigstens eine Ringnut (97) enthält, die über wenigstens einen radialen Kanal (99) des Spreizelements (61e) mit einem von axial außen zugänglichen Druckmittelanschluß des Spreizelements (61e) verbunden ist.

18. Baugruppe nach einem der Ansprüche 1 bis 17,
dadurch gekennzeichnet,
daß das Spreizelement (61a, h) eine zentrische Öffnung (65a; 159) zur Aufnahme eines Pilotlagers (67a) für die radiale Führung eines relativ zur Eingangskomponente (3; 3h) drehbaren Teils, insbesondere einer Eingangswelle (13) eines im Antriebsweg auf die Kupplung folgenden Getriebes oder eines Führungszapfens (157) oder dgl. enthält.

19. Baugruppe nach einem der Ansprüche 1 bis 17,
dadurch gekennzeichnet,
daß das Spreizelement (61) eine zentrische, durchgehende Öffnung (65), insbesondere eine Gewindeöffnung, enthält und daß in der Stirnöffnung (57) des Abtriebsendes (5) auf der kupplungsfernen Seite ein Pilotlager (67) für die radiale Führung eines relativ zur Eingangskomponente (3) drehbaren Teils, insbesondere einer Eingangswelle (13) eines im Antriebsweg auf die Kupplung folgenden Getriebes oder eines Führungszapfens (68) oder dergleichen enthält.

20. Baugruppe nach Anspruch 1,
dadurch gekennzeichnet,
daß das Spreizelement als Tellerfederpaket ausgebildet ist, dessen flach aneinanderliegende Tellerfedern (127) zentrische Öffnungen (119) haben, durch die eine in eine zentrische Gewindebohrung (123) der Kurbelwelle (7f) geschraubte Spannschraube (121) tritt.

21. Baugruppe nach Anspruch 20,
dadurch gekennzeichnet,
daß die Tellerfedern (127) verrundete Außenränder haben und daß der Innenmantel der Stirnöffnung (57f) des Abtriebsendes (5f) mit einer Vielzahl umlaufender Rillen (125) zur Aufnahme der verrundeten Außenränder der Tellerfedern (127) versehen ist.

22. Baugruppe nach Anspruch 20 oder 21,
dadurch gekennzeichnet,
daß die Spannschraube (121) auf der zur Kurbelwelle (7f) gelegenen Seite des Tellerfederpakets eine mit den Tellerfedern (117f) radial überlappende Ringschulter (129) aufweist.

23. Baugruppe nach Anspruch 1 bis 22,
dadurch gekennzeichnet,
daß das Abtriebsende (56) zumindest über einen Teil der axialen Erstreckung seiner Fügefläche wenigstens einen, vorzugsweise mehrere in Umfangsrichtung verteilte, axiale Schlitze (85) aufweist.

24. Baugruppe nach einem der Ansprüche 1 bis 23,
dadurch gekennzeichnet,
daß die Fügeflächen axial selbsthemmend konische Form haben.

25. Baugruppe nach einem der Ansprüche 1 bis 23,
dadurch gekennzeichnet,
daß die Fügeflächen kreiszylindrische Form haben.

26. Baugruppe nach einem der Ansprüche 1 bis 25,
dadurch gekennzeichnet,
daß die Kurbelwelle (7) im Bereich des Abtriebsendes (5) mittels eines Kurbelwellenlagers (19) in einem Motorgehäuse (17) drehbar gelagert und mittels einer Dichtringanordnung (15) gegenüber dem Motorgehäuse (17) abgedichtet ist und daß der Innendurchmesser der Dichtringanordnung (15) zumindest annhähernd gleich dem Außendurchmesser der Fügefläche des Abtriebsendes (5) der Kurbelwelle (7) und/oder des Innendurchmesser des Kurbelwellenlagers (19) ist.

27. Baugruppe nach einem der Ansprüche 1 bis 26,
dadurch gekennzeichnet,
daß die Eingangskomponente (3) eine ringförmige, die Fügefläche der Eingangskomponente (3) bildende Nabe (45) hat, von der ein bezogen auf die axiale Erstreckung der Nabe (45) dünner scheibenförmiger Flansch (49) absteht.

28. Baugruppe nach einer der Ansprüche 1 bis 27,
dadurch gekennzeichnet,
daß die Eingangskomponente (3) eine ringförmige, die Fügefläche der Eingangskomponente (3) bildende Nabe (45) hat, von der ein Rohransatz (77) axial absteht, dessen radiale Wanddicke kleiner ist als die radiale Dicke der Nabe (45) und daß sich die Fügefläche der Eingangskomponente (3) in den Rohransatz (7) hineinerstreckt.

29. Baugruppe nach einem der Ansprüche 1 bis 28,
dadurch gekennzeichnet,
daß die Fügeflächen zusätzlich miteinander verklebt sind.

30. Baugruppe nach einem der Ansprüche 1 bis 29,
dadurch gekennzeichnet,
daß zumindest eine von zwei einander zugeordneten
Spannflächen der Preßsitzkupplung mit einem reibungsmindernden Gleitmittel beschichtet ist oder aus einem Schmierstoff enthaltenden Sintermaterial besteht.

31. Baugruppe nach einem der Ansprüche 1 bis 30,
dadurch gekennzeichnet,
daß die Kupplung als Reibungskupplung (1) ausgebildet ist, deren Ausgangskomponente als Kupplungsscheibe (23) mit einer zur Drehachse (20) koaxiale Nabe (21) ausgebildet und mit der Eingangskomponente (3) vor deren Befestigung an dem Abtriebsende (5) der Kurbelwelle (7) zu einer Baueinheit vereinigt ist,
daß der Preßsitzkupplung (11) zum radialen Verspannen der Fügeflächen axial belastbare Werkzeugangriffsflächen zugeordnet sind, die durch die Nabe (21) der Kupplungsscheibe (23) hindurch axial zugänglich sind und/oder an die die Nabe (21) der Kupplungsscheibe (23) anlegbar ist und wobei wenigstens eine Werkzengangriffsfläche an dem Spreizelement (61; 117) vorgesehen ist.

32. Anordnung nach Anspruch 31,
dadurch gekennzeichnet,
daß der Preßsitzkupplung (11) Werkzeugangriffsflächen zugeordnet sind, über die bei einer Demontage der radiale Preßsitz der Fügeflächen lösbar ist und daß auch diese Werkzeugangriffsflächen durch die Nabe (21) der Kupplungsscheibe (23) axial zugänglich sind.

33. Anordnung nach Anspruch 31 oder 32,
dadurch gekennzeichnet,
daß die Kupplung (1) als Modulkupplung ausgebildet ist, deren Kupplungsgehäuse (27) betriebsmäßig unlösbar mit einem die Eingangskomponente (3) bildenden Schwungrad verbunden ist.

34. Anordnung nach einem der Ansprüche 31 bis 33,
dadurch gekennzeichnet,
daß die Werkzeugangriffsfläche der Preßsitzkupplung (11) als axiale Stirnfläche oder als Innengewinde eines zentrischen Gewindelochs (65) augsbildet ist.

35. Anordnung nach einem der Ansprüche 31 bis 34,
dadurch gekennzeichnet,
daß eine der beiden, insbesondere die radial innere der beiden Fügeflächen wenigstens eine umlaufende Ringnut (97) enthält, die über wenigstens einen radialen Kanal (99) der Kurbelwelle (7e) mit einem von axial außen zugänglichen, zentrischen Druckmittelanschluß im Bereich der Stirnöffnung (59e) verbunden ist.

## Claims

1. Assembly comprising a crankshaft (7) of an internal combustion engine of a motor vehicle rotatable about an axis of rotation (20) and an input component (3) of a clutch (1) designed as a friction clutch or hydrodynamic clutch of torque converter secured to an output end (5) of the crankshaft (7) by means of a force-fit coupling (1), in which the input component (3) and the output end (5) have assigned essentially axial joining faces on the inner circumference of a central opening (53) of the input component (3) on the one hand and on the outer circumference of a region of the output end (5) extending axially into this opening (53) on the other hand, and assigned radial ring stop faces (55; 95) axially positioning the input component (3) relative to the crankshaft (7), characterised in that the essentially axial joining faces form the torque transmitting faces of the force-fit coupling (11) whereby the output end (5) of the crankshaft (7) has a central front opening (57) in which an expanding element (61; 117) clamping the outer joining face of the output end (5) radially outwardly against the inner joining face of the input component (3), which expanding element can expand the outer diameter of the output end (5) relative to the inner diameter of a radially opposite region of the front opening (57) by introducing an axial force into the expanding element (61; 117).

2. Assembly according to claim 1, characterised in that the expanding element (61) has a conical outer surface, and the front opening (57) or a conical sleeve (59) inserted in the front opening (57) assigned to the conical outer surface has a conical inner surface.

3. Assembly according to claim 2, characterised in that the conical inner surface of the front opening (57c, d, e, h) tapers towards the crankshaft (7c, d, e, h).

4. Assembly according to claim 2, characterised in that the conical inner surface of the conical sleeve (59, a, b) tapers axially away from the crankshaft (7, a, b).

5. Assembly according to claim 4, characterised in that the conical sleeve (59a) is secured against axial withdrawal from the front opening (57a) by a retaining ring (79) on the crankshaft (7a).

6. Assembly according to claim 4, characterised in that the input component (3a) of the clutch has an annular shoulder (81) radially overlapping the conical sleeve (59a) and securing the conical sleeve (59a) against axial withdrawal from the front opening (57a).

7. Assembly according to claim 4, characterised in that a hub (21b) of the clutch disc radially overlaps an axial front face of the conical sleeve (59b) accessible axially from the outside, the hub being axially displaceable up to the front face of the conical sleeve (59b) and having, on the side facing axially away from the conical sleeve (59b), an axial front face accessible axially from outside for the application of tools.

8. Assembly according to one of claims 1 to 7, characterised in that the expanding element (61) has a central axial opening accessible axially from the outside with undercut surfaces widening radially for the application of tools, the opening being in particular a central, axial threaded bore (65).

9. Assembly according to one of claims 1 to 8, characterised in that the expanding element (61) has a through central axial opening (65) accessible axially from outside and the front opening (57) passes into a central axial opening of the crankshaft (7) provided with radially widening undercut surfaces, in particular into a central axial threaded bore (71; 123).

10. Assembly according to claim 9, characterised in that the diameter of the central opening (71) of the crankshaft (7) is equal to or smaller than the diameter of the central opening (65) of the expanding element (61).

11. Assembly according to claim 9 or 10, characterised in that the two central openings are designed as threaded bores (65d, 71d) with opposite thread directions, and receive a common differential threaded screw (87) accessible axially from the outside.

12. Assembly according to claim 9 or 10, characterised in that the two central openings are designed as threaded bores (65d, 71d) have different thread leads and receive a common differential threaded screw (87) accessible axially from the outside.

13. Assembly according to claim 11 or 12, characterised in that the differential threaded screw (87) axially between the two threaded bores (65d, 71d) has a radial projection (91) engagaeable with an inner face of the expanding element (61d).

14. Assembly according to claim 9 or 10, characterised in that the front opening (57a) of the output end (5a) of the central threaded bore (65a) of the expanding element (61a) forms axially flush opposite a supporting surface for tools (69a) adapted to be screwed into the threaded bore (65a) and draw the expanding element (61a) in the direction of tightening.

15. Assembly according to one of claims 1 to 10, characterised in that the expanding element (61) has a conical outer surface and, on its side facing away from the crankshaft (7), an axial front face accessible axially from the outside, in particular for the application of tools.

16. Assembly according to claim 15, characterised in that the hub (21b; 21c) of the clutch disc radially overlaps the axial front face of the expanding element (61b; 61c), is axially displaceable up to the front face and, on its side axially remote from the expanding element (61b; 61c) also has an axial front face accessible from outside for the application of tools.

17. Assembly according to one of claims 2 to 16, characterised in that one of the conical surfaces, in particular the conical outer surface of the expanding element (61e) has at least one annular groove (97) which is connected by at least one radial channel (99) of the expanding element (61e) with a pressure-medium connection of the expanding element (61e) accessible axially from the outside.

18. Assembly according to one of claims 1 to 17, characterised in that the expanding element (61a, h) has a central opening (65a; 159) for receiving a pilot bearing (67a) for the radial guidance of a part that rotates relative to the input component (3;3h), in particular an input shaft (13) of a transmission following the clutch or a guide pin (157) or the like.

19. Assembly according to one of claims 1 to 17, characterised in that the expanding element (61) has a central through opening (65) in particular a threaded bore, and in the front opening (57) of the output end (5) on the clutch remote side has a pilot bearing (67) for the radial guiding of a part rotatable relative to the input component (3), in particular an input shaft (13) of a transmission following the clutch or a guide pin (68) or the like.

20. Assembly according to claim 1, characterised in that the expanding element is designed as a Belleville spring package, the Belleville springs (127) lying flat on one another having central openings (119) through which a clamping bolt (121) screwed into a central threaded bore (123) of the crankshaft (7f) is inserted.

21. Assembly according to claim 20, characterised in that the Belleville springs (127) have rounded outer edges, and the inner surface of the front opening (57f) of the output end (5f) has a plurality of circumferential grooves (125) in which the rounded outer edges of the Belleville springs (127) are received.

22. Assembly according to claim 20 or claim 21, characterised in that the clamping bolt (121) on the side of the Belleville springs remote from the crankshaft (7f), has an annular shoulder (129) radially overlapping the Belleville springs (117f).

23. Assembly according to claim 1 to 22, characterised in that the output end (56) has, at least over part of the axial extent of its joining face, at least one, preferably several axial slots (85) spaced apart circumferentially.

24. Assembly according to one of claims 1 to 23, characterised in that the joining faces are conical and axially self-locking.

25. Assembly according to one of claims 1 to 23, characterised in that the joining faces are of a circular cylindrical shape.

26. Assembly according to one of claims 1 to 25, characterised in that the crankshaft (7) is supported for rotation by a crankshaft bearing (19) located proximate to the output end (5) in an engine housing (17) and is sealed off from the engine housing (17) by means of a sealing ring arrangement (15), and in that the inside diameter of the sealing ring arrangement (15) is at least approximately equal to the outside diameter of the joining face of the output end (5) of the crankshaft (7) and/or the inside diameter of the crankshaft bearing (19).

27. Assembly according to one of claims 1 to 26, characterised in that the input component (3) has an annular hub (45) that forms the joining face of the input component (3) from which a thin disc-like flange (49) projects extending radially from the hub (45).

28. Assembly according to one of claims 1 to 27, characterised in that the input component (3) has an annular hub (45) forming the joining face of the input component (3), from which a tubular extension (77) extends axially the radial wall thickness of which is smaller than the radial thickness of the hub (45), and in that the joining face of the input component (3) extends into the tubular extension (77).

29. Assembly according to one of claims 1 to 28, characterised in that the joining faces are also stuck together.

30. Assembly according to one of claims 1 to 29, characterised in that at least one of two associated bearing faces of the force-fit coupling is coated with a friction-reducing lubricant or is made of a sintered material containing a lubricant.

31. Assembly according to one of claims 1 to 30, characterised in that the clutch is designed as a friction clutch (1) the output component of which is designed as a clutch disc (23) with a hub (21) coaxial to the axis of rotation (20) and is joined with the input component (3) before its attachment to the output end (5) of the crankshaft (7) to a unit, in that to the force-fit coupling (11) are assigned for radial securing of the joining faces axially loadable tool application faces, which through the hub (21) of the clutch disc (23) are axially accessible and/or can be placed on the hub (21) of the clutch disc (23) and whereby at least one tool application face is provided on the expanding element (61; 117).

32. Assembly according to claim 31, characterised in that the force-fit coupling (11) is provided with tool-application surfaces through which the radial force fit of the joining faces is adapted to be released for disassembly, and in that the tool application surfa are accessible axially through the hub (21) of the clutch disc (23).

33. Assembly according to claim 31 or 32 characterised in that the clutch (1) is designed as a modular clutch the housing (27) of which is connected non-releasably to a flywheel forming the input component (3).

34. Assembly according to one of claims 31 to 33, characterised in that the tool application surface of the force-fit coupling (11) is designed as an axial front face or as an inner thread of a central threaded opening (65).

35. Assembly according to one of claims 31 to 34, characterised in that one of the two joining faces particularly the radially inner one contains at least one circumferential annular groove (97) which is connected by at least one radial channel (99) of the crankshaft (7e) with a central pressure-medium connection, accessible axially from outside, in the region of the front opening (59e).

## Revendications

1. Ensemble comprenant
un vilebrequin (7), pouvant tourner autour d'un axe de rotation (20), d'un moteur à combustion interne d'un véhicule et un composant d'entrée (3), fixé à une extrémité de sortie (5) du vilebrequin (7), au moyen d'un accouplement à ajustement serré (1), d'un embrayage (1) conformé en embrayage à friction ou embrayage hydrodynamique ou en convertisseur de couple de rotation,
le composant d'entrée (3) et l'extrémité de sortie (5) présentant des surfaces de joint associées l'une à l'autre, s'étendant sensiblement axialement, sur le pourtour intérieur d'une ouverture (53) centrée du composant d'entrée (3) d'une part et sur le pourtour extérieur d'une zone de l'extrémité de sortie (5) pénétrant axialement dans cette ouverture (53) d'autre part, ainsi que des surfaces de butée annulaires (55 ; 95) s'étendant radialement, associées l'une à l'autre, positionnant axialement le composant d'entrée (3) par rapport au vilebrequin (7),
caractérisé
en ce que les surfaces de joint, s'étendant sensiblement axialement, forment les surfaces de transmission du couple de rotation de l'accouplement à ajustement serré (11), l'extrémité de sortie (5) du vilebrequin (7) présentant une ouverture frontale (57) centrée, dans laquelle se trouve un élément d'écartement (61 ; 117) contraignant la surface de joint extérieure de l'extrémité de sortie (5) radialement vers l'extérieur, contre la surface de joint intérieure du composant d'entrée (3), élément d'écartement qui peut écarter le diamètre extérieur de l'extrémité de sortie (5), par rapport au diamètre intérieur d'une zone de l'ouverture frontale (57) opposée radialement, par introduction d'une force axiale dans l'élément d'écartement (61 ; 117).

2. Ensemble selon la revendication 1,
caractérisé
en ce que l'élément d'écartement (61) possède une enveloppe extérieure conique et l'ouverture frontale (57), ou une douille conique (59) insérée dans l'ouverture frontale (57), possède une enveloppe intérieure conique, associée à l'enveloppe extérieure conique.

3. Ensemble selon la revendication 2,
caractérisé
en ce que l'enveloppe intérieure conique de l'ouverture frontale (57c, d, e, h) est rétrécie vers le vilebrequin (7c, d, e, h).

4. Ensemble selon la revendication 2,
caractérisé
en ce que l'enveloppe intérieure conique de la douille conique (59, a, b) est rétrécie en s'éloignant axialement du vilebrequin (7, a, b).

5. Ensemble selon la revendication 4,
caractérisé
en ce que la douille conique (59a) est bloquée au moyen d'un circlip (79) sur le vilebrequin (7a), contre une extraction axiale hors de l'ouverture frontale (57a).

6. Ensemble selon la revendication 4,
caractérisé
en ce que le composant d'entrée (3a) de l'embrayage présente un épaulement annulaire (81) recouvrant radialement la douille conique (59a), bloquant la douille conique (59a) contre une extraction axiale hors de l'ouverture frontale (57a).

7. Ensemble selon la revendication 4,
caractérisé
en ce que le moyeu (21b) du disque d'embrayage recouvre radialement une face frontale axiale, accessible axialement de l'extérieur, de la douille conique (59b), est déplaçable axialement jusqu'à la face frontale de la douille conique (59b) et possède, sur le côté opposé axialement à la douille conique (59b), également une face frontale axiale, accessible axialement de l'extérieur, pour l'intervention d'outils.

8. Ensemble selon l'une des revendications 1 à 7,
caractérisé
en ce que l'élément d'écartement (61) présente une ouverture axiale, centrée, accessible axialement de l'extérieur, avec des surfaces de détalonnage, s'élargissant radialement, pour la mise en place d'outils, en particulier un trou taraudé (65) axial, centré.

9. Ensemble selon l'une des revendications 1 à 8,
caractérisé
en ce que l'élément d'écartement (61) présente une ouverture axiale (65) centrée, continue, accessible axialement de l'extérieur, et l'ouverture frontale (57) se prolonge par une ouverture axiale, centrée, pourvue de surfaces de détalonnage s'élargissant radialement, du vilebrequin (7), en particulier par un trou taraudé (71 ; 123) axial, centré.

10. Ensemble selon la revendication 9,
caractérisé
en ce que le diamètre de l'ouverture centrée (71) du vilebrequin (7) est égal ou inférieur au diamètre de l'ouverture centrée (65) de l'élément d'écartement (61).

11. Ensemble selon la revendication 9 ou 10,
caractérisé
en ce que les deux ouvertures centrées sont réalisées en tant que trous taraudés (65d, 71d) avec sens des filets opposés l'un à l'autre et logent une vis à filetage différentiel (87) commune, accessible axialement de l'extérieur.

12. Ensemble selon la revendication 9 ou 10,
caractérisé
en ce que les deux ouvertures centrées sont réalisées en tant que trous taraudés (65d, 71d), possèdent des pas de filetage différents et logent une vis à filetage différentiel (87) commune, accessible axialement de l'extérieur.

13. Ensemble selon la revendication 11 ou 12,
caractérisé
en ce que la vis à filetage différentiel (87) présente axialement entre les deux trous taraudés (65d, 71d), une saillie (91) radiale, à visser contre une face frontale intérieure de l'élément d'écartement (61d).

14. Ensemble selon la revendication 9 ou 10,
caractérisé
en ce que l'ouverture frontale (57a) de l'extrémité de sortie (5a) du trou taraudé (65a) centré de l'élément d'écartement (61a) forme, de manière alignée axialement et opposée, une surface d'appui pour des outils (69a) à visser dans le trou taraudé (65a), tirant l'élément d'écartement (61a) dans le sens du serrage.

15. Ensemble selon l'une des revendications 1 à 10,
caractérisé
en ce que l'élément d'écartement (61) possède une enveloppe extérieure conique et sur son côté éloigné du vilebrequin (7), une face frontale axiale, accessible axialement de l'extérieur, en particulier pour l'intervention d'outils.

16. Ensemble selon la revendication 15,
caractérisé
en ce que le moyeu (21b, 21c) du disque d'embrayage recouvre radialement la face frontale axiale de l'élément d'écartement (61b ; 61c), est déplaçable axialement jusqu'à la face frontale et possède, sur le côté éloigné axialement de l'élément d'écartement (61b ; 61c), également une face frontale axiale, accessible de l'extérieur, pour l'intervention d'outils.

17. Ensemble selon l'une des revendications 2 à 16,
caractérisé
en ce que l'une des enveloppes coniques, en particulier l'enveloppe extérieure conique de l'élément d'écartement (61e), contient au moins une rainure annulaire (97), qui est reliée, par au moins un canal radial (99) de l'élément d'écartement (61e), avec un raccord de fluide sous pression de l'élément d'écartement (61e), accessible axialement de l'extérieur.

18. Ensemble selon l'une des revendications 1 à 17,
caractérisé
en ce que l'élément d'écartement (61a, h) contient une ouverture centrée (65a ; 159) destinée à loger un palier pilote (67a) pour le guidage radial d'un élément tournant par rapport au composant d'entrée (3 ; 3h), en particulier d'un arbre d'entrée (13) d'une transmission, faisant suite à l'embrayage, dans la chaîne cinématique, ou d'un tenon de guidage (157) ou similaire.

19. Ensemble selon l'une des revendications 1 à 17,
caractérisé
en ce que l'élément d'écartement (61) contient une ouverture (65) continue, centrée, en particulier une ouverture taraudée, et en ce que dans l'ouverture frontale (57) de l'extrémité de sortie (5), sur le côté éloigné de l'embrayage, il contient un palier pilote (67) pour le guidage radial d'un élément tournant par rapport au composant d'entrée (3), en particulier d'un arbre d'entrée (13) d'une transmission, faisant suite à l'embrayage, dans la chaîne cinématique ou d'un tenon de guidage (68) ou similaire.

20. Ensemble selon la revendication 1,
caractérisé
en ce que l'élément d'écartement est conformé en paquet de ressorts Belleville, dont les ressorts Belleville (127) s'appliquant à plat les uns contre les autres, possèdent des ouvertures centrées (119), à travers lesquelles passe une vis de serrage (121) vissée dans un trou taraudé (123), centré, du vilebrequin (7f).

21. Ensemble selon la revendication 20,
caractérisé
en ce que les ressorts Belleville (127) possèdent des bords extérieurs arrondis et en ce que l'enveloppe intérieure de l'ouverture frontale (57f) de l'extrémité de sortie (5f) est pourvue d'un grand nombre de gorges (125) périphériques, destinées à recevoir les bords extérieurs arrondis des ressorts Belleville (127).

22. Ensemble selon la revendication 20 ou 21,
caractérisé
en ce que la vis de serrage (121) présente, sur le côté du paquet de ressorts Belleville, situé vers le vilebrequin (7f), un épaulement annulaire (129) recouvrant radialement les ressorts Belleville (117f).

23. Ensemble selon les revendications 1 à 22,
caractérisé
en ce que l'extrémité de sortie (56) présente au moins, sur une partie de l'extension axiale de sa surface de joint, au moins une, de préférence plusieurs, fentes (85) axiales, réparties dans la direction périphérique.

24. Ensemble selon l'une des revendications 1 à 23,
caractérisé
en ce que les surfaces de joint ont une forme conique axialement autobloquante.

25. Ensemble selon l'une des revendications 1 à 23,
caractérisé
en ce que les surfaces de joint ont une forme cylindrique circulaire.

26. Ensemble selon l'une des revendications 1 à 25,
caractérisé
en ce que le vilebrequin (7), dans la zone de l'extrémité de sortie (5), est monté tournant dans un carter moteur (17) au moyen d'un palier de vilebrequin (19) et est rendu étanche au moyen d'un dispositif à bague d'étanchéité (15), par rapport au carter moteur (17), et en ce que le diamètre intérieur du dispositif à bague d'étanchéité (15) est au moins approximativement égal au diamètre extérieur de la surface de joint de l'extrémité de sortie (5) du vilebrequin (7) et/ou au diamètre intérieur du palier de vilebrequin (19).

27. Ensemble selon l'une des revendication 1 à 26,
caractérisé
en ce que le composant d'entrée (3) possède un moyeu (45) annulaire formant la surface de joint du composant d'entrée (3), duquel dépasse une bride (49) en forme de disque mince, par rapport à l'extension axiale du moyeu (45).

28. Ensemble selon l'une des revendications 1 à 27,
caractérisé
en ce que le composant d'entrée (3) possède un moyeu (45) annulaire formant la surface de joint du composant d'entrée (3), duquel dépasse axialement un appendice tubulaire (77), dont l'épaisseur de paroi radiale est inférieure à l'épaisseur radiale du moyeu (45) et en ce que la surface de joint du composant d'entrée (3) s'étend à l'intérieur de l'appendice tubulaire (7).

29. Ensemble selon l'une des revendications 1 à 28,
caractérisé
en ce que les surfaces de joint sont en supplément collées entre elles.

30. Ensemble selon l'une des revendications 1 à 29,
caractérisé
en ce qu'au moins une de deux surfaces de serrage, associées l'une à l'autre, de l'accouplement à ajustement serré est revêtue d'un agent de glissement réduisant la friction ou est constituée d'un matériau fritté contenant un lubrifiant.

31. Ensemble selon l'une des revendications 1 à 30,
caractérisé
en ce que l'embrayage est conformé en embrayage à friction (1), dont le composant de sortie est un disque d'embrayage (23) avec un moyeu (21) coaxial à l'axe de rotation (20) et est réuni avec le composant d'entrée (3), avant sa fixation sur l'extrémité de sortie (5) du vilebrequin (7), pour former une unité de construction,
en ce qu'à l'accouplement à ajustement serré (11) sont associées des surfaces d'intervention d'outils pouvant être sollicitées axialement pour le serrage radial des surfaces de joint, qui sont accessibles axialement à travers le moyeu (21) du disque d'embrayage (23) et/ou contre lesquelles peut s'appliquer le moyeu (21) du disque d'embrayage (23) et une surface d'intervention d'outils au moins étant prévue sur l'élément d'écartement (61 ; 117).

32. Ensemble selon la revendication 31,
caractérisé
en ce qu'à l'accouplement à ajustement serré (11) sont associées des surfaces d'intervention d'outils, par lesquelles, lors d'un démontage, l'ajustement serré radial des surfaces de joint est amovible et en ce que ces surfaces d'intervention d'outils aussi sont accessibles axialement par le moyeu (21) du disque d'embrayage (23).

33. Ensemble selon la revendication 31 ou 32,
caractérisé
en ce que l'embrayage (1) est conçu en tant qu'embrayage modulaire dont le carter d'embrayage (27) est relié pour le fonctionnement de manière inamovible avec un volant d'inertie, formant le composant d'entrée (3).

34. Ensemble selon l'une des revendications 31 à 33,
caractérisé
en ce que la surface d'intervention d'outils de l'accouplement à ajustement serré (11) est conformée en surface frontale axiale ou en taraudage d'un trou taraudé (65) centré.

35. Ensemble selon l'une des revendications 31 34,
caractérisé
en ce que l'une des deux, en particulier la surface de joint radialement intérieure des deux surfaces de joint, contient au moins une rainure annulaire (97) périphérique, qui est reliée par au moins un canal radial (99) du vilebrequin (7e), avec un raccord de fluide sous pression centré, accessible axialement de l'extérieur, dans la zone de l'ouverture frontale (59e).
